# EUROPÄISCHE PATENTSCHRIFT

(11) **EP 4 313 810 B1**
(45) Veröffentlichungstag und Bekanntmachung des Hinweises auf die Patenterteilung: **28.01.2026**
(21) Anmeldenummer: 22716411.8
(22) Anmeldetag: 22.03.2022
(51) Int. Cl.: B65G 37/02, B65G 43/08, B65G 47/08, B65G 47/31

(54) **VORRICHTUNG UND VERFAHREN ZUR ERZEUGUNG VON ABSTÄNDEN ZWISCHEN EINZELNEN FÖRDERGUTEINHEITEN BEI GLEICHZEITIGEM TRANSPORT DER FÖRDERGUTEINHEITEN**
APPARATUS AND METHOD FOR CREATING SPACINGS BETWEEN INDIVIDUAL GROUPS OF CONVEYED GOODS DURING SIMULTANEOUS TRANSPORT OF THE GROUPS OF CONVEYED GOODS
APPAREIL ET PROCÉDÉ DE CRÉATION D'ESPACEMENTS ENTRE DES GROUPES INDIVIDUELS DE MARCHANDISES TRANSPORTÉES PENDANT LE TRANSPORT SIMULTANÉ DES GROUPES DE MARCHANDISES TRANSPORTÉES

(30) Priorität: 22.03.2021 DE 102021107087; 22.03.2021 LU 102682
(43) Veröffentlichungstag der Anmeldung: 07.02.2024
(73) Patentinhaber: cellumation GmbH, 28357 Bremen (DE)
(72) Erfinder: URIARTE, Claudio, 28309 Bremen (DE)
(74) Vertreter: RCD-Patent Giesen, Schmelcher & Griebel Patentanwälte PartG mbB
(86) Internationale Anmeldenummer: PCT/EP2022/057559
(87) Internationale Veröffentlichungsnummer: WO 2022/200392

(56) Entgegenhaltungen:
- EP-A1- 2 874 923
- EP-A1- 3 357 839
- WO-A1-2011/131573
- WO-A2-2019/175195
- DE-A1- 102015 117 241
- DE-A1- 102018 113 678
- DE-A1- 19 927 251

## Beschreibung

Die Erfindung betrifft eine Vorrichtung und ein Verfahren zur Erzeugung von Abständen zwischen einzelnen Förderguteinheiten bei gleichzeitigem Transport der Förderguteinheiten, insbesondere in Produktionsumgebungen und in der Logistik.

### Hintergrund

Im modernen Anlagenbau sowie in fördertechnischen Anlagen werden logistische Objekte wie zum Beispiel Boxen, Behälter, Trays, Paletten, usw. sowie Werkstücke beziehungsweise Werkstückträger mittels Materialflusssystemen transportiert. Diese Systeme bestehen aus einem mechanischen Aufbau, einer elektrischen Verkabelung und einer Steuerung zur Steuerung der Antriebs- und damit der Flussgeschwindigkeiten.

Moderne Materialflusssysteme sind in der Regel mechanisch modular aufgebaut. Eine Förderanlage setzt sich im Allgemeinen zusammen aus einer Pluralität von unterschiedlichen Förderabschnitten, die zusammenwirkend angeschlossen werden. Diese Förderabschnitte sind im Normalfall um ein Vielfaches größer als ein zu förderndes Objekt, wie beispielsweise ein Förderband oder ein angetriebener Rollenförderer, auf die eine Vielzahl von Objekten gleichzeitig platziert werden können.

Ein beispielhaftes Materialflusssystem ist aus der internationalen Anmeldung WO 2011 / 131 573 A1 bekannt.

Gerade mit dem immer mehr zunehmenden Online- und Versandhandel und mit der zunehmenden Bedeutung von global aufeinander abhängigen Lieferketten sind die Logistik und die Förderung von Paketen und anderen Fördergütern eine hochtechnisierte und komplexe Aufgabe. Ein wesentlicher Bestandteil dieser Materialflusssysteme sind diejenigen Förderabschnitte, die neben dem zugrunde liegenden Transport durch beispielsweise Förderbänder oder Rollenförderer ein Sortieren der Fördergüter ausführen. Hierbei kann es sich zum Beispiel um ein Aufteilen von gleichen Fördergütern zu unterschiedlichen Zielorten oder um ein Sortieren unterschiedlicher Fördergüter nach ihrer Art, Beschaffenheit oder ebenfalls nach ihrer Zielbestimmung handeln. Die Fördergüter müssen jedoch in den meisten Fällen in einem geordneten Verband zur Sortierung zugeführt werden, zumeist einzeln hintereinander in Form einer Perlenkette, sozusagen im Gänsemarsch, oder in Reihen oder nebeneinander verlaufender Reihen, so dass zuerst eine Vereinzelung erfolgt, bevor die wirkliche Sortierung beginnt.

Hieraus ergeben sich für die Vereinzelungs- und Sortierabschnitte der Fördervorrichtungen eine Vielzahl von verschiedenen Funktionen, um einen hohen Förderdurchsatz und damit eine gute Produktivität der gesamten Förderanlage zu ermöglichen. Es ist derzeit jedoch keine Anlage bekannt, die eine Sortierung von ungeordneten, nicht vorher ausgerichteten oder zumindest annähernd vereinzelten Fördergütern (von "bulk" Zuführung) vornehmen kann. Nicht nur die Quantität, die ein solcher Sortierabschnitt erfolgreich verarbeiten kann, sondern auch die Qualität, zum Beispiel die Zuverlässigkeit und Richtigkeit der Sortierung, wird in erheblichem Umfang bestimmt durch die Abstände bzw. Lücken, die zwischen den einzelnen Fördergütern zur Verfügung stehen, um die verschiedenen Funktionen des Sortierabschnitts sauber auszuführen. Hier ist stets eine Optimierung erforderlich zwischen den sich entgegenstehenden Anforderungen an die Güte der Sortierung einerseits, die einen großen Abstand zwischen den einzelnen Fördergütern bevorzugt, und an die Durchflussmenge, damit die Sortierung nicht zum Engpass der gesamten Förderung wird. Hierzu sind möglichst geringe Lücken zwischen den einzelnen Fördergütern wünschenswert.

Damit ergibt sich eine der Sortierung vorgelagerte, höchst wichtige Funktion eines Materialflusssystems, nämlich die Funktion des in der Fachsprache sogenannten Gappings. Gapping ist das gezielte Herstellen von vorbestimmten Abständen bzw. Lücken zwischen einzelnen Fördergütern. Die Lücken bzw. vorbestimmte Abstände sind dabei sowohl in Förderrichtung als auch quer zur Förderrichtung herzustellen und zu beachten.

Im einfachsten Fall wird ein Gapping erreicht durch ein manuelles Auflegen der Fördergüter auf eine Zuführung zur Sortierstation oder sogar auf den Sortierabschnitt selbst. Der aus dem Englischen entlehnte Fachausdruck für ein solches Auflegen und Vereinzeln (ggf. gekoppelt mit einer Gleichausrichtung der Fördergüter) bezeichnet dies als "Induction". Eine weitere einfache Methode ist die ebenfalls manuelle Erzeugung von ausreichenden Lücken zwischen am Bedienpersonal vorbeifahrenden Fördergütern auf einem dem Sortierabschnitt vorgelagertem reinen Transportabschnitt der Förderanlage. Manuelle Manipulation zur Erzeugung von vorbestimmten ausreichenden Abständen zwischen den einzelnen Fördergütern ist jedoch aufwendig und vergleichsweise langsam. Der Bedarf, das Gapping automatisiert auszuführen und entsprechende anlagentechnische Lösungen zu finden, war und ist daher sehr hoch.

Beispiele für dynamische Gapping-Vorrichtungen sind in den amerikanischen Veröffentlichungsschriften US 8,201,681 B2, US 10,647,522 B1 und US 2020/0109011 A1 beschrieben. Hier ist jeweils eine Vorrichtung bzw. ein Vorrichtungsabschnitt zum Fördern von einzelnen Fördergütern offenbart, bei der bzw. bei dem der Förderbereich unterteilt ist in eine Mehrzahl hintereinander angeordneter Förderbänder, die mit jeweils zueinander unterschiedlichen Geschwindigkeiten operieren können. Abhängig von bestehenden Abständen oder Dimensionen der einzelnen Fördergüter kann durch einen hinterlegten Steuerungsalgorithmus eines oder mehrere der hintereinander angeordneten Förderbänder so in seiner Geschwindigkeit gesteuert werden, dass ein Fördergut schneller oder langsamer im Verhältnis zu dem benachbarten Fördergut transportiert wird. Auf diese Weise kann ein Abstand vergrößert oder verkleinert werden zwischen diesen beiden Fördergütern. Hier erfolgt das Gapping allerdings ausschließlich in Förderrichtung.

Diese Vorrichtungen weisen jedoch in mehrfacher Hinsicht Limitierungen auf, die in einem modernen Materialflusssystem nicht mehr zeitgemäß sind. Zum Einen funktioniert die Abstandsherstellung nur dann gut, wenn die Fördergüter in mehr oder weniger geordneter Weise einzeln hintereinander im Gänsemarsch in die Gapping-Vorrichtung eingebracht werden. Dies liegt darin begründet, dass zunächst Sensoren die vorhandenen Abstände oder Dimensionen der Fördergüter erfassen müssen. Vor Allem aber liegt dies an der zugrunde liegenden Fördertechnik der unterschiedlichen Geschwindigkeiten, die nur in Transportrichtung der eingesetzten Förderbänder angelegt werden können. Anders ausgedrückt kann bei nicht ausreichenden Abständen der Fördergüter nebeneinander in Querrichtung zur Förderrichtung keine Manipulation zur Vergrößerung des Abstands stattfinden. Zudem wird eine solche Gapping-Anlage auch nicht variabel für kleine und auch große Fördergüter einsetzbar sein, denn wenn eine Mehrzahl an Fördergütern zusammen jeweils auf einem der hintereinander angeordneten Förderbänder Platz haben, kann auch durch die unterschiedlichen Geschwindigkeiten der Förderbänder kein ausreichender Abstand zwischen diesen Fördergütern geschaffen werden. Sie würden dann eher gemeinsam schneller transportiert.

Ein weiterer wichtiger Nachteil ist die große Länge der Vorrichtung, die allein durch die hintereinander angeordneten Förderbänder nur zur Erzeugung von Abständen bzw. Lücken zwischen den Fördergütern eingenommen wird. Der überaus große Raumbedarf wird auch dadurch nicht wirklich gemildert, dass man mehrere dieser Gapping-Anlagen nebeneinander positioniert, denn dann muss man hinter der Mehrfachanlage wiederum Platz für ein Zusammenführen bzw. Kreuzen der Fördergüter vorsehen.

Gemäß der US Patentschrift US 9,790,035 B2 wird versucht, diese Limitierungen zumindest teilweise dadurch zu adressieren, dass im Vergleich zu den vorgenannten Anlagen kleiner dimensionierte hintereinander liegende Förderbänder eingesetzt und dynamisch, d.h. unterschiedlich und nicht-linear in ihrer Geschwindigkeit, gesteuert und betrieben werden.

Diese Probleme sind allgemein bekannt und es gibt weitere Gapping-Fördersysteme, die versuchen diese Prozesse zumindest teilweise zu verbessern, zu vereinfachen, beziehungsweise die genannten Nachteile zu beheben.

Aus der europäischen Patentschrift EP 2059467 B1 ist eine technische Gapping-Vorrichtung bekannt, in der zur Herstellung ausreichender Abstände zwischen den Fördergütern ein oder mehrere Roboter eingesetzt werden, die einzelne Güter von der Hauptförderstrecke abheben, sie auf eine Nebenförderstrecke übertragen und anschließend in eine geeignete Lücke zwischen den auf der Hauptförderstrecke befindlichen Gütern wieder einfädeln. Dies ist eine sehr aufwendige und in ihrem Durchsatz sehr begrenzte Lösung für eine Gapping-Anlage, da die durch den bzw. die Roboter ausgeführten Wegnahmen und Widerauflagen der einzelnen Güter sehr zeitaufwendig ist. Zudem wird auch durch diese Anlage sehr viel produktiver Platz eingenommen.

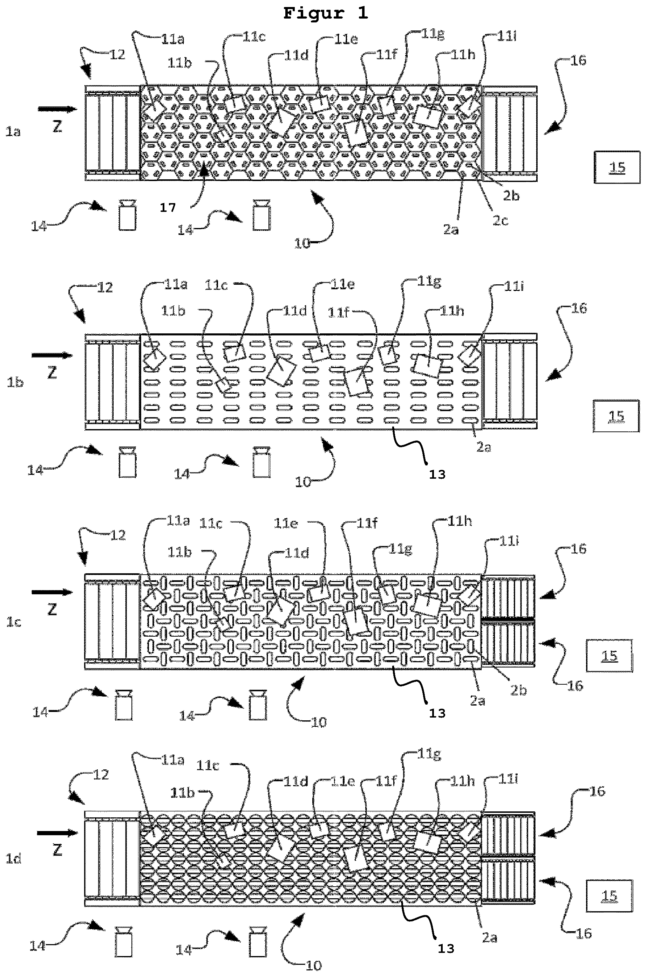

Des Weiteren wird in der europäischen Patentschrift EP 1556297 B1, welche den Oberbegriff des Anspruchs 4 zeigt, eine Fördereinrichtung mit Handhabung der verteilten Artikel beschrieben, die mit der Bezugsnummer 26 eine Gapping-Anlage umfasst, welche durch neben einander liegende, nicht parallel ausgerichtete und vergleichsweise kurze Förderbänder 54a-54h gebildet wird (vgl. Figur 1). Durch das Passieren dieses Abschnitts werden die benachbarten einzelnen Fördergüter nicht nur in Förderrichtung auseinander bewegt, sondern auch quer zur Förderrichtung. Allerdings sind die Abstände, die durch eine solche Anordnung erzielbar sind, sehr begrenzt. Die Richtungen der Bewegungsvektoren, die auf die Fördergüter zur Abstandherstellung wirken, sind zudem durch die fixierte Orientierung des Förderbands festdefiniert und können nachträglich nicht verändert werden. Dadurch ist die Einrichtung sehr statisch nur auf immer wiederkehrende Fördergüter bzw. Förderaufgaben anwendbar.

Alle bisher bekannten Gapping-Förderanlagen weisen somit einen sehr großen Raumbedarf, insbesondere in Bezug auf die durch sie erzielbaren Abstände der Fördergüter, auf. Sie sind zudem begrenzt in ihrer Fähigkeit, ausreichende Abstände auch in einer kurzen Transportdistanz und damit in einer kurzen Zeitspanne zu erzeugen. Weiterhin ist zu beachten, dass alle bisher bekannten Gapping-Systeme, die mit Fördertechnik arbeiten, mechanisch fest definierte Bewegungsrichtungen, die auf die Fördergüter derart wirken, dass sie entweder entlang der Förderrichtung unterschiedlich bewegt werden oder in geringerem Umfang auch quer zur Förderrichtung. Diese mechanisch fest definierten Bewegungsrichtungen sind nachträglich nicht veränderbar, ohne die Anlage umzubauen. Zwar kann der Einsatz von Robotern in dieser Hinsicht Abhilfe schaffen, allerdings ist der Einsatz von Robotern neben den hohen Kosten und Wartungsanforderungen mit dem Nachteil verbunden, dass sie nur sehr langsam einzelne Fördergüter aufheben und wieder absetzen. Ein hoher Durchsatz ist damit nicht erzielbar. Außerdem ist bei den bekannten Anlagen zu beachten, dass sie keine individuelle und variable Manipulation einzelner Fördergüter leisten können, insbesondere wenn die Fördergüter nicht bereits vereinzelt hintereinander zugeführt werden, sondern in einem ungeordneten Verbund mit mehreren auch quer zur Förderrichtung nebeneinander liegenden Gütern ("bulk"). Auch ein Kreuzen der Bewegungspfade der zu beabstandenden Fördergüter ist nicht ohne hohen Raumbedarf durchzuführen.

### Aufgabe

Es ist daher eine Aufgabe der Erfindung eine Vorrichtung und ein Verfahren bereitzustellen, die es ermöglichen, variabel auch bei nicht geordneten und/oder nicht einzeln hintereinander zugeführten Fördergütern einen vorgegebenen Soll-Abstand zwischen den Fördergütern herzustellen, wobei ein geringer Raumbedarf der Vorrichtung eingehalten werden soll. Hierzu soll die Vorrichtung und das Verfahren bevorzugt ermöglichen, Abstände zwischen den Fördergütern durch Bewegen derselben herzustellen (dynamisches Gapping). Zudem soll der Durchsatz der Gapping-Vorrichtung hoch sein bei zuverlässiger Gapping Funktion. Weiterhin soll die Gapping-Vorrichtung bzw. das Gapping-Verfahren auch ohne bauliche Veränderung der Anlage änderbar sein in den der Abstandsherstellung zugrunde liegenden Bewegungsmöglichkeiten der Fördergüter.

### Darstellung der Erfindung

Die Aufgabe wird gelöst durch ein Fördersystem zur Erzeugung von Abständen d zwischen einer ersten Förderguteinheit und einer zweiten Förderguteinheit bei gleichzeitigem Transport der Förderguteinheiten in eine Förderrichtung z, umfassend:
- eine Zufuhreinrichtung zum Zuführen von zumindest der ersten Förderguteinheit und der zweiten Förderguteinheit, wobei die erste Förderguteinheit und die zweite Förderguteinheit einen ersten Abstand aufweisen,
- einen oder mehrere nachfolgende Förderabschnitte mit mehreren, in der Förderrichtung z örtlich hintereinander und nebeneinander liegenden Fördergutantrieben zum Transport der Förderguteinheiten mit einer Ist-Geschwindigkeit,
- Erfassungsmittel zum typisierenden Erfassen der einzelnen Förderguteinheiten,
- Mittel zum Bestimmen einer Soll-Position der ersten Förderguteinheit und der zweiten Förderguteinheit,
- eine Steuerung/Regelung zum Steuern oder Regeln eines Soll-Abstands d zwischen der ersten Förderguteinheit und der zweiten Förderguteinheit anhand der besagten Soll-Positionen, dadurch gekennzeichnet, dass
- die Fördergutantriebe derart ausgebildet und eingerichtet sind, dass sie einzeln oder in einer Mehrzahl zusammenwirkend die einzelnen Förderguteinheiten in jede Richtung in der Förderebene derart bewegen können, dass der Soll-Abstand d zwischen der ersten Förderguteinheit und der zweiten Förderguteinheit bei dem Übertritt in einen nachfolgenden Förderabschnitt vorliegen, wobei der Soll-Abstand unterschiedlich ist vom ersten Abstand, wobei
- die Fördergutantriebe jeweils einzeln mittels eines Motors angetrieben und einzeln durch die Steuerung/Regelung steuerbar sind, und wobei
- die Erfassungsmittel ein Signal an die Steuerung/Regelung mit Informationen zu Eigenschaften der ersten Förderguteinheit und der zweiten Förderguteinheit senden können, die Steuerung/Regelung Signale der Mittel zum Bestimmen einer Soll-Position der ersten Förderguteinheit und der zweiten Förderguteinheit erhält und in Abhängigkeit von diesen Signalen Steuerungs-/Regelungssignale an die Fördergutantriebe zum Bewegen der ersten Förderguteinheit und der zweiten Förderguteinheit zur Soll-Position ermittelt und ausgibt, derart, dass die erste Förderguteinheit und die zweite Förderguteinheit durch die Fördergutantriebe individuell variabel in jeder Richtung der Förderebene bewegbar sind zum Erzeugen des Soll-Abstands d , wobei die erste Förderguteinheit und die zweite Förderguteinheit zugleich in die Förderrichtung z transportiert werden.

Ein Sollabstand d kann dabei vordefiniert sein und z.B. eine bestimmte Größe aufweisen. Der Sollabstand kann aber auch abhängig von einem oder mehreren Parametern der Förderguteinheit(en) sein. Beispielsweise kann es vorgesehen sein, dass für ein große Förderguteinheit und/oder schnelle Förderguteinheit ein anderer (größerer) Sollabstand d sich ergeben soll, als für eine kleine Förderguteinheit und/oder langsame Förderguteinheit. Beispielsweise kann abhängig von der Größe / Geschwindigkeit der Fördereinheit die Größe für die Berechnung mit einem Faktor größer 1, z.B. 1.1 skaliert werden, bevor der Abstand berechnet wird. Ebenso kann Berücksichtigung finden, wenn eine Förderguteinheit eher langgestreckt ist, d.h. wenn das Verhältnis der Seiten (Länge/Breite) z.B. größer als 2 oder kleiner als 0,5 ist. Ein Beispiel für einen in Relation zu Parametern der Förderguteinheiten gewählter Sollabstand ist ein Bruchteil der kürzesten Seitenlänge einer Förderguteinheit, bevorzugt der kürzesten Seitenlänge der ersten und/oder zweiten Förderguteinheit.

Eine Förderrichtung z kann sich dabei sowohl als lokale Förderrichtung, z.B. auf der Basis eine oder mehrerer benachbarter Förderguteinheiten oder aber global zwischen einer Zufuhreinrichtung und einem gewünschten Verlassort (z.B. das Ende eines Förderabschnittes des Fördersystem verstanden werden ohne andere Definitionen auszuschließen.

Mit der erfindungsgemäßen Vorrichtung wird vorteilhafterweise ermöglicht, variabel auch bei nicht geordneten und/oder nicht einzeln hintereinander zugeführten Fördergütern einen vorgegebenen Soll-Abstand zwischen den Fördergütern herzustellen. Weiterhin kann ein geringer Raumbedarf der Vorrichtung eingehalten werden, denn aufgrund der Bewegung der Fördergüter variabel in jede Richtung der Förderebene können die Bewegungen zur Erzeugung der Abstände ohne eine weite Distanz zu benötigen ausgeführt werden. Damit besitzt die erfindungsgemäße Vorrichtung die Fähigkeit, ausreichende Abstände auch in einer kurzen Transportdistanz und damit in einer kurzen Zeitspanne zu erzeugen. Zudem kann die erfindungsgemäße Vorrichtung, die geforderten Abstände zwischen den Fördergütern durch Bewegen derselben individuell herzustellen (dynamisches Gapping). Es ist keine Beschränkung der Bewegungsrichtung, insbesondere der Auseinander-Bewegungsrichtung, vorhanden, so dass für jedes Fördergut individuell eine Bewegungsrichtung und deren Weglänge berechnet und ausgeführt werden kann. Zudem kann die Geschwindigkeit der Förderung individuell angepasst werden, sie kann sogar negativ sein, sofern ein einzelnes Fördergut beispielsweise an anderen Fördergütern bzw. deren Bewegungen vorbei ohne Kollision in seinem Weg gekreuzt werden muss, um seine Soll-Position zu erreichen. Dies ist mit bisher bekannten Anlagen nicht möglich.

Außerdem ist der Durchsatz der Gapping-Vorrichtung sehr hoch bei zuverlässiger Gapping Funktion, da die einzelnen Gapping-Bewegungen der Fördergüter mit dem erfindungsgemäßen Fördersystem auf einem im Vergleich zu den bisher bekannten Systemen sehr kleinen Raum ausgeführt werden. Weiterhin ist die erfindungsgemäße Vorrichtung auch ohne bauliche Veränderung der Anlage änderbar in den der Abstandsherstellung zugrunde liegenden Bewegungsmöglichkeiten der Fördergüter.

Die vorliegende Erfindung betrifft ein Fördersystem zur Erzeugung von Abständen zwischen einzelnen Förderguteinheiten bei gleichzeitigem Transport der Förderguteinheiten in eine Förderrichtung z, was in der Fachsprache auch als Gapping bezeichnet werden kann. Hierbei werden im Wesentlichen zwei Funktionen gleichzeitig für eine nachfolgende Sortierung, genaue Erkennung oder beabstandeten Weitertransport durch die Vorrichtung mit ihren Einrichtungen erfüllt: Zum einem werden die Fördergüter in Förderrichtung z transportiert, zum anderen werden die Fördergüter derart manipuliert, dass sie einen für nachfolgende Schritte ausreichenden Abstand d voneinander aufweisen. Die Förderrichtung z kann entlang einer gerade Linie verlaufen, kann jedoch auch eine nicht gerade Bahn beschreiben, die beispielsweise Kurven Krümmungen und/oder Richtungswechsel aufweist.

Das erfindungsgemäße Fördersystem umfasst eine Zufuhreinrichtung zum Zuführen von einer Mehrzahl von Förderguteinheiten. Die Zufuhreinrichtung kann sowohl eine aktiv transportierende oder eine nicht aktiv transportierende Einrichtung sein. Beispielsweise kann eine Zufuhreinrichtung aus einem Tisch oder einem Arbeitsplatz für Bedienpersonal gebildet sein, andererseits kann eine Zufuhreinrichtung zum Beispiel aus einer Rutsche oder einem angetriebenen oder nicht angetriebenen Band- oder Rollenförderer gebildet werden.

Als Fördergut wird im Sinne der vorliegenden Erfindung insbesondere Stückgut verstanden. Förderguteinheiten können verpackte oder unverpackte Einheiten sein. Bevorzugt handelt es sich um in Kartons, Umschläge oder in Folien verpackte Waren oder um Warenträger wie Trays, Kleinladungsträger und Tablare. Bei den Förderguteinheiten kann es sich um gleichartige, insbesondere um gleich dimensionierte, Förderguteinheiten handeln. Bevorzugt handelt es sich jedoch um verschiedenartige, insbesondere um verschieden dimensionierte, Förderguteinheiten.

Als erste und zweite Förderguteinheiten können im Sinne der vorliegenden Erfindung insbesondere zwei beliebige benachbarte Förderguteinheiten betrachtet werden.

Weiterhin kann über die Zufuhreinrichtung eine Mehrzahl von einzelnen Förderguteinheiten entweder geordnet, bevorzugt aber ungeordnet ("im bulk"), den Förderabschnitten zugeführt werden. Werden die Förderguteinheiten geordnet zugeführt, so können sie aufgereiht einzeln hintereinander und/oder nebeneinander zugeführt werden. Bevorzugt werden die Förderguteinheiten aber nicht einzeln hintereinander aufgereiht zugeführt. Besonders bevorzugt handelt es sich um mehr als 50 Förderguteinheiten pro Minute, um mehr als 100 Förderguteinheiten pro Minute, um mehr als 150 Förderguteinheiten pro Minute, oder um mehr als 200 Förderguteinheiten pro Minute, die von der Zufuhreinrichtung zu den nachfolgenden Förderabschnitten zugeführt werden.

Unter dem Begriff bulk wird eine Mehrzahl von ungeordneten Förderguteinheiten verstanden. Es handelt sich insbesondere um eine lose Ansammlung von Förderguteinheiten, die in Form, Abmessungen, Gewicht und Beschaffenheit (z.B. Oberfläche, Material) unterschiedlich sein können. Die Position und Orientierung einer einzelnen Förderguteinheit innerhalb des "bulks" muss keiner definierten Anordnung folgen. Eine einzelne Förderguteinheit kann zu einem oder mehreren anderen Förderguteinheiten Kontakte aufweisen oder die Förderguteinheiten können sich überlappen. Die Förderguteinheiten haben zum Beispiel völlig unterschiedlichen Abstände zueinander und sie können sich berühren oder sie können beispielsweise zusätzlich oder alternativ jeweils unterschiedliche, nicht in Förderrichtung weisende Ausrichtungen ihrer Hauptachsen aufweisen.

Die erfindungsgemäße Vorrichtung umfasst weiterhin einen oder mehrere nachfolgende Förderabschnitte mit mehreren, in der Förderrichtung z örtlich hintereinander und nebeneinander liegenden Fördergutantrieben zum Transport der Förderguteinheiten mit einer Ist-Geschwindigkeit.

Der oder die Förderabschnitte sind in Förderrichtung anschließend an die Zufuhreinrichtung derart angeordnet, dass sie die Förderguteinheiten von der Zufuhreinrichtung aufnehmen und in Förderrichtung z transportieren. Mindestens zum Zweck des Transports der Förderguteinheiten sind erfindungsgemäß pro Förderabschnitt mehrere, in der Förderrichtung z örtlich nebeneinander und hintereinander liegende Fördergutantriebe vorgesehen.

Als Fördergutantrieb wird im Rahmen der vorliegenden Erfindung insbesondere eine Einrichtung verstanden, mit der ein Bewegungsimpuls auf eine Förderguteinheit derart übertragen wird, dass sie in Förderrichtung und in eine andere Richtung der Förderebene bewegt wird. Diese variable Bewegung kann sowohl von einem Fördergutantrieb einzeln oder von mehreren Fördergutantrieben zusammenwirkend bestimmt und ausgeführt werden.

Beispiele für einen Fördergutantrieb sind insbesondere im Verhältnis zur Auflagefläche der Förderguteinheit kleiner als diese ausgebildete, durch einen Motor angetriebene Rollen. Hierbei kann ein Motor eine Rolle aber auch eine Mehrzahl an gekoppelten Rollen, beispielsweise zwei oder drei Rollen, antreiben, die zusammen einen Fördergutantrieb bilden. Mit anderen Worten können die Fördergutantriebe auch wahlweise in Gruppen angetrieben und/oder in Gruppen gesteuert bzw. geregelt werden. Insbesondere bevorzugt handelt es sich um Fördergutantriebe, wie sie beispielsweise als Motor-angetriebenes Allseitenrad oder als Mecanumrad in der Fördertechnik bekannt sind. Bei Allseitenrädern, auch omnidirektionale Räder genannt, besteht die Lauffläche des Rades aus Rollen, deren Drehachsen in einem Winkel zur Drehachse des Hauptrades liegen. Ähnlich aufgebaut wie ein Allseitenrad ist die Sonderform des Mecanum-Rads, bei dem die Rollen in einem Winkel zur Hauptachse angebracht sind (meist 45°). Dadurch kann die Rotation des Rades und die Rotation der Rollen nicht entkoppelt voneinander stattfinden.

Durch eine Anordnung der Fördergutantriebe in Förderrichtung neben- und hintereinander und durch eine entsprechende Ausrichtung der Fördergutantriebe wird gemäß der vorliegenden Erfindung erreicht, dass die Förderguteinheiten individuell in unterschiedliche Richtungen bewegt werden können, um einen Soll-Abstand zwischen ihnen herzustellen und gleichzeitig die Förderguteinheiten zu einem nachfolgenden Abschnitt weiter transportiert werden. Bevorzugt sind die Fördergutantriebe kein Förderband, keine drehbaren Scheiben, wobei sich der Begriff Scheibe auf die Auflagefläche für die Förderguteinheiten bezieht, und keine drehbaren Kugeln.

Die Förderantriebe können die Förderguteinheiten einzeln oder in einer Mehrzahl in Förderrichtung transportieren. Erfindungsgemäß können die Fördergutantriebe die Förderguteinheiten aber auch zusätzlich zum Transport in Förderrichtung variabel in jede Richtung der Förderebene bewegen, wobei die Fördergutantriebe einzeln oder in einer Mehrzahl von Antrieben zusammenwirkend arbeiten. Unter dem Begriff der Bewegbarkeit in jede Richtung der Förderebene wird im Rahmen der vorliegenden Erfindung insbesondere verstanden, dass eine Förderguteinheit sowohl in Förderrichtung als auch in einem variablen Winkel abweichend zur Förderrichtung bewegt werden kann, wie zum Beispiel in einem ersten Unterabschnitt des Förderabschnitts in 90° Richtung, d.h. quer, zur Förderrichtung, in einem weiteren Unterabschnitt dann 20° zur Förderrichtung, und in einem anschließenden Unterabschnitt 5° zur Förderrichtung. Der von der Förderrichtung abweichende Bewegungsvektor ist mithin dynamisch einstellbar, sowohl im Hinblick auf seine Veränderbarkeit in der Richtung als auch in seiner Größe und damit in der Beschleunigung bzw. Geschwindigkeit der Förderguteinheiten. Es kann sogar vorgesehen werden, dass die Bewegung der Förderguteinheiten in Förderrichtung durch die Fördergutantriebe in ihrer Geschwindigkeit verlangsamt wird oder gar umgekehrt wird (negative Geschwindigkeit).

Ein Sollabstand d kann dabei vordefiniert sein und z.B. eine bestimmte Größe aufweisen. Der Sollabstand kann aber auch abhängig von einem oder mehreren Parametern der Förderguteinheit(en) sein. Beispielsweise kann es vorgesehen sein, dass für ein große Förderguteinheit und/oder schnelle Förderguteinheit ein anderer (größerer) Sollabstand d sich ergeben soll, als für eine kleine Förderguteinheit und/oder langsame Förderguteinheit. Beispielsweise kann abhängig von der Größe / Geschwindigkeit der Fördereinheit die Größe für die Berechnung mit einem Faktor größer 1, z.B. 1.1 skaliert werden, bevor der Abstand berechnet wird. Ebenso kann Berücksichtigung finden, wenn eine Förderguteinheit eher langgestreckt ist, d.h. wenn das Verhältnis der Seiten (Länge/Breite) z.B. größer als 2 oder kleiner als 0,5 ist. Beispielsweise kann als Sollabstand d für den Abstand zwischen den sich am nächsten liegenden Punkten der ersten und zweiten Förderguteinheit ein bestimmter Bruchteil der kürzesten Seitenlänge einer Fördereinheit definiert sein, wie z.B. ein Viertel der kürzesten Seitenlänge, ein Drittel der kürzesten Seitenlänge, ein Fünftel der kürzesten Seitenlänge, ein Zehntel der kürzesten Seitenlänge. Es kann für den Sollabstand d auch ein Bereich vorgesehen werden, wie z.B. zwischen einem Zehntel der kürzesten Seitenlänge und einem Viertel der kürzesten Seitenlänge. Der Sollabstand d sollte insbesondere unter Berücksichtigung der beabsichtigten mittleren Fördergeschwindigkeit bezogen auf die Förderrichtung z (und damit dem beabsichtigten zeitlichen Durchsatz des Fördersystems) gewählt werden.

Unter dem Begriff Erfassungsmittel zum typisierenden Erfassen der einzelnen Förderguteinheiten werden im Rahmen der vorliegenden Erfindung sowohl aktiv erfassende als auch nicht aktiv erfassende Mittel verstanden. Als aktiv erfassende Mittel wird insbesondere ein oder mehrere Mittel zum Erfassen der Geometrie, der Kontur, der Höhe, der Beschriftung, der Höhenkontur, der Farbe, maschinenlesbarer optischer Kennzeichnungen, menschenlesbarer optischer Kennzeichnungen, maschinenlesbarer funkbasierter Kennzeichnungen, wie beispielsweise Kameras, Tiefenkameras (3D-Kameras), andere optische Sensoren, Funkempfänger oder ID-Lesegeräte zum Lesen von Aufgedruckten Codes, z.B. Barcodescanner, QR-Codescanner etc., verstanden. Als nicht aktiv erfassende Mittel können gleichermaßen bevorzugt auch in einer Steuerung oder auf einem Datenträger einlesbare hinterlegte Daten zu den Förderguteinheiten, insbesondere zu deren Geometrie, Kontur, Höhe, Beschriftung, Höhenkontur, Farbe, Kennzeichnung, oder zu deren ggf. vorbestimmten Abständen bei der Zufuhr zum erfindungsgemäßen Fördersystem als Erfassungsmittel umfasst sein und dienen.

Unter dem Begriff der typisierenden Erfassung wird im Rahmen der vorliegenden Erfindung insbesondere verstanden, dass nicht alle erfassungsmöglichen Parameter einer Förderguteinheit jeweils erfasst werden, sondern vielmehr die Erfassung einer Eigenschaft oder Kennzeichnung bzw. eines Parameters ausreichend ist, um eine Förderguteinheit derart zu bestimmen, dass ihre Bewegung zum Herstellen einer Soll-Position und damit eines Soll-Abstands zu ihren benachbarten Förderguteinheiten ermittelt und die Bewegung durch die erfindungsgemäße Vorrichtung ausgeführt werden kann. Es können Umrisse, Objekttypen, Farben, Volumen, Längen oder auch nur die Abstände zwischen benachbarten Förderguteinheiten erfasst werden.

Des Weiteren können beispielsweise Tabellen mit Angaben zu Förderguteinheitstypen in der Steuerung hinterlegt sein, die eine bevorzugte Bewegung des Förderguteinheitstyps enthalten. Ebenfalls denkbar ist, dass die typisierende Erfassung eine Förderguteinheit erkennt und in ein leeres Tabellenfeld schreibt und dadurch einen neuen Förderguteinheitstyp erzeugt.

Das erfindungsgemäße Fördersystem umfasst daneben Mittel zum Bestimmen einer Soll-Position einer Förderguteinheit. Unter dem Begriff Mittel zum Bestimmen einer Soll-Position werden im Rahmen der vorliegenden Erfindung insbesondere in einer Steuerung oder auf einem Datenträger einlesbare hinterlegte Daten verstanden, die beispielsweise anhand eines festgelegten Algorithmus oder dynamisch auf Basis von erfassten Ist-Positionen der Förderguteinheiten im Bereich der Zufuhr oder am Beginn des nachfolgenden Förderabschnitts oder bevorzugt anhand der Typisierungserfassung der Förderguteinheiten eine Soll-Position am Ende des Förderabschnitts bestimmen.

Weiterhin umfasst die erfindungsgemäße Fördervorrichtung eine Steuerung/Regelung zum Steuern oder Regeln eines Soll-Abstands d zwischen einzelnen Förderguteinheiten anhand der jeweiligen, individuellen besagten Soll-Positionen.

Erfindungsgemäß ist nun vorgesehen, dass die Fördergutantriebe derart ausgebildet und eingerichtet sind, dass sie die einzelnen Förderguteinheiten in jede Richtung in der Förderebene derart bewegen können, dass die Soll-Abstände d zwischen den Förderguteinheiten bei dem Übertritt in einen nachfolgenden Förderabschnitt vorliegen, wobei
- die Fördergutantriebe jeweils einzeln mittels eines Motors angetrieben und einzeln durch die Steuerung/Regelung steuerbar sind, und wobei
- die Erfassungsmittel ein Signal an die Steuerung/Regelung mit Informationen zu Eigenschaften der einzelnen Förderguteinheit senden können, die Steuerung/Regelung Signale der Mittel zum Bestimmen einer Soll-Position der Förderguteinheit erhält und in Abhängigkeit von diesen Signalen Steuerungs-/Regelungssignale an die Fördergutantriebe zum Bewegen der einzelnen Förderguteinheiten zur Soll-Position ermittelt und ausgibt, derart, dass die Förderguteinheiten durch die Fördergutantriebe individuell variabel in jeder Richtung in der Förderebene bewegbar sind zum Erzeugen des Soll-Abstands d.

Kern der Erfindung ist somit das Zusammenwirken der einzeln oder in Gruppen mittels eines Motors angetriebenen und einzeln oder in Gruppen steuerbaren Fördergutantriebe mit der Steuerung/Regelung, die in Abhängigkeit von den Signalen der Erfassungsmittel und den Mitteln zum Bestimmen einer Soll-Position die Förderguteinheiten derart bewegen, so dass sie die nötigen Abstände zwischen den einzelnen Förderguteinheiten herstellen. Die Fördergutantriebe können die Förderguteinheiten dabei einzeln oder zusammenwirkend mit einer Mehrzahl von Antrieben in jede Richtung der Förderebene bewegen, auch gegen die Förderrichtung z.

Zusammenwirkende Fördergutantriebe können bevorzugt in Antriebsmodulen zusammengefasst angeordnet sein. Ein Antriebsmodul kann beispielsweise zwei, drei, vier, fünf, sechs, sieben, acht, neun oder zehn Fördergutantriebe aufweisen. Die in einem Antriebsmodul angeordneten Fördergutantriebe bzw. deren Motoren können jeweils einzeln angetrieben und angesteuert werden. Bevorzugt werden die Fördergutantriebe eines Antriebsmoduls jedoch abgestimmt aufeinander derart gesteuert und angetrieben, dass sie gemeinsam eine vorgegebene Bewegungsrichtung und eine vorgegebene Beschleunigung auf eine Förderguteinheit übertragen.

In einer bevorzugten Ausgestaltung der Erfindung sind die Fördergutantriebe in mehreren Antriebsmodulen angeordnet, so dass ein Antriebsmodul jeweils zwei oder drei oder vier Fördergutantriebe umfasst. Die Fördergutantriebe eines Antriebsmoduls können dabei entweder jeweils einzeln oder in Gruppen, insbesondere in Gruppen von zwei oder drei gekoppelten Allseitenrädern, durch einen steuerbaren Motor angetrieben werden.

In einer weiterhin bevorzugten Ausführungsform der Erfindung sind die Rotationsachsen der Fördergutantriebe eines Antriebsmoduls entweder parallel oder bevorzugt nicht parallel zueinander angeordnet.

Insbesondere wenn drei Fördergutantriebe mit ihren jeweiligen Förderrichtungen in einem Winkel von 60° zueinander angeordnet sind, kann ein Fördermodul eine Förderguteinheit in jede Richtung der Förderebene bewegen. Hierdurch kann eine Bewegung auch auf sehr kleinem Raum übertragen und von der Förderguteinheit ausgeführt werden. Dadurch kann der Raumbedarf des erfindungsgemäßen Fördersystems sehr klein gehalten werden im Vergleich zu bisher bekannten Gapping-Anlagen.

Alternativ oder kumulativ sind die Rotationsachsen der Fördergutantriebe eines Antriebsmoduls in einer weiteren Ausgestaltung nicht parallel zur Förderrichtung angeordnet.

Die Fördergutantriebe können beispielsweise gebildet werden aus gezielt drehbaren Fördergutantrieben. In diesem Fall ist es nicht nötig, die einzelnen Fördergutantriebe zu Fördermodulen zusammenzufassen. Ein Zusammenwirken der gezielt drehbaren Fördergutantriebe kann durch eine Steuerung derart herbeigeführt werden, dass in diesem Fall gleichermaßen eine individuelle Bewegung der Förderguteinheit in jede gewünschte Richtung der Förderebene ermöglicht wird, bei gleichzeitigem Transport der Förderguteinheiten an einen nachfolgenden Förderabschnitt.

In einer bevorzugten Ausgestaltung des erfindungsgemäßen Fördersystems sind die Fördergutantriebe kleiner dimensioniert sind als die Auflagefläche einer Förderguteinheit.

In dieser Ausgestaltung ist es insbesondere möglich den Förderguteinheiten individuell, auch mittels in einer Trägerplatte oder in einem bzw. vielen Trägermodulen fixierten Fördergutantrieben sowohl eine Bewegung in Förderrichtung als auch eine Bewegung in einem variablen Winkel zur Förderrichtung aufzuprägen. Hierdurch kann die Vorrichtung nicht nur bei sehr geringem Raumbedarf eine schnelle und zuverlässige Gapping-Funktion ausführen, sondern sie kann auch ohne Umbauten auf unterschiedliche Anforderungen bezüglich der Förderguteinheiten angepasst werden.

In einer bevorzugten Ausführungsform der Erfindung sind die Fördergutantriebe des ersten Förderabschnitts drehbar gelagert.

Als Beispiele für drehbar gelagerte Fördergutantriebe lassen sich zum Beispiel angetrieben drehbare Rollen, Scheiben, Räder oder kleinformatige Bänder oder Gurte nennen. Insbesondere bevorzugt sind die Fördergutantriebe in dieser Ausführungsform gesteuert individuell drehbar.

Hierdurch kann die Variabilität der durch die Fördergutantriebe auf die Förderguteinheiten übertragbaren Bewegung im Vergleich zu den bisher bekannten Systemen stark erhöht werden.

In einer bevorzugten Ausführungsform der vorliegenden Erfindung sind die Erfassungsmittel zum typisierenden Erfassen der Förderguteinheiten Sensoren, Lichtschranken, Kameras, Tiefenkameras (3D-Kameras), Photodioden, Radareinrichtungen, andere optische Sensoren, Funkempfänger oder ID-Lesegeräte zum Lesen von aufgedruckten Codes, z.B. Barcodescanner, QR-Codescanner oder Kombinationen davon.

Die Erfassungsmittel können je nach Art und möglicher Kennzeichnung der Förderguteinheiten ausgewählt werden. Umfassen die Förderguteinheiten beispielsweise einen RFID-Chip, so kann ein entsprechendes über Funk arbeitendes Erfassungsmittel vorgesehen werden. Umfassen die Förderguteinheiten jedoch zum Beispiel farbliche Markierungen, können Photodioden verwendet werden. Dies gilt auch für eine Erfassung beispielsweise von Kontouren mittels Leisten mit Photodioden. Sofern die Förderguteinheiten keine einheitlichen, wiederkehrenden Kennzeichen aufweisen, kann es effizienter sein, Kameras oder Lichtschranken als Erfassungsmittel vorzusehen. Entsprechend kann ein oder mehrere Barcodescanner eingesetzt werden, sofern die Förderguteinheiten jeweils einen Barcode aufweisen.

In einer Ausgestaltung des erfindungsgemäßen Fördersystems sind die Mittel zum Bestimmen einer Soll-Position einer Förderguteinheit ein Computerprogrammprodukt. Hierbei kann es sich beispielsweise um einen festgelegten Algorithmus zur Berechnung der zur Herstellung der Soll-Abstände der Förderguteinheiten benötigten Bewegungen und deren Bewegungsgeschwindigkeiten handeln. Es ist gleichermaßen möglich, keinen festgelegten Algorithmus vorzusehen, sondern ein selbst-lernendes Programm, z.B. unter Verwendung einer Kl-Routine. Das Computerprogrammprodukt kann in einer zentralen oder dezentralen Steuerung vorgesehen sein. Bevorzugt ist es in jedoch in einer zentralen Steuerung vorgesehen. Signale der Erfassungsmittel zum typisierenden Erfassen der einzelnen Förderguteinheiten werden mit Hilfe des Computerprogrammprodukts herangezogen zur Bestimmung einer Soll-Position der Förderguteinheit. Hieraus können dann Steuersignale erzeugt und an die einzeln steuerbaren Fördergutantriebe gesendet werden, so dass eine zum Erreichen der Soll-Position benötigte Bewegung der Förderguteinheit von den Fördergutantrieben ausgeführt werden kann.

In einer weiteren Ausführungsform der Erfindung die umfasst Steuerung/Regelung zum Steuern oder Regeln eines Soll-Abstands zwischen einzelnen Förderguteinheiten anhand der besagten Soll-Position Steuersignale zu mindestens zwei benachbarten, bevorzugt mindestens drei benachbarten, besonders bevorzugt mindestens vier, fünf oder sechs benachbarten Fördergutantrieben. Die benachbarten Fördergutantriebe können sowohl alle zu einem Fördergutantriebsmodul gehören, sie können aber auch zu verschiedenen Modulen gehören und nur in ihrer Lage im Förderabschnitt benachbart sein.

Hierdurch kann ein sehr hoher Durchsatz an geförderten und mit einem Soll-Abstand zueinander versehenen Förderguteinheiten erzielt werden.

Bevorzugt umfasst das erfindungsgemäße Fördersystem in einer weiteren Ausgestaltung der Erfindung Mittel zum Überprüfen der erzielten Soll-Abstände. Wie die Mittel zum Erfassen der Förderguteinheiten kann das Überprüfen durch Sensoren, Lichtschranken, Kameras, Photodioden, Radareinrichtungen, ID-Lesegeräte zum Lesen von aufgedruckten Codes wie Barcodescanner oder QR-Codescanner, oder Kombinationen davon erfolgen und ausgeführt werden.

Insbesondere bevorzugt werden die Mittel zum Überprüfen der erzielten Soll-Abstände nicht erst am Ende des Passing-Förderabschnitts vorgesehen, sondern beispielsweise eher mittig oder zwischen Mitte und Ende des Gapping-Förderabschnitts.

Auf diese Weise kann eine Nachjustierung ausgeführt werden, sofern ein Soll-Abstand noch nicht vollständig durch das Bewegen der Förderguteinheiten entlang und/oder in einem Winkel zur Förderrichtung erreicht wurde.

Die Erfindung betrifft weiterhin ein Verfahren zur Erzeugung von Abständen d zwischen einer ersten Förderguteinheit und einer zweiten Förderguteinheit bei gleichzeitigem Transport der Förderguteinheiten in eine Förderrichtung z, umfassend die folgenden Schritte:
- Zuführen von einer Mehrzahl zumindest der ersten Förderguteinheiten und der zweiten Förderguteinheit in einer ersten Anordnung, wobei die erste Förderguteinheit (11) und die zweite Förderguteinheit abschnittsweise gleichzeitig in Förderrichtung (z) zugeführt werden, und wobei die Förderguteinheiten orthogonal zur Förderrichtung (z) zueinander versetzt zugeführt werden,
- typisierendes Erfassen der Förderguteinheiten,
- Bestimmen einer Soll-Position der ersten Förderguteinheit und der zweiten Förderguteinheit,
- Steuern oder Regeln eines Soll-Abstands zwischen der ersten Förderguteinheit und der zweiten Förderguteinheit anhand der besagten Soll-Position, und
zu diesem Zweck Bewegen der ersten Förderguteinheit und der zweiten Förderguteinheit durch Fördergutantriebe, die eine oder mehrere Förderguteinheiten in jede Richtung der Förderebene variabel und individuell bewegen können, und zwar derart, dass der Soll-Abstand d zwischen der ersten Förderguteinheit und der zweiten Förderguteinheit bei dem Übertritt in einen nachfolgenden Förderabschnitt vorliegen, wobei der Soll-Abstand d unterschiedlich ist vom ersten Abstand, wobei das Bewegen in Abhängigkeit von Steuersignalen erfolgt, die aus dem typisierenden Erfassen der ersten Förderguteinheit und der zweiten Förderguteinheit und dem Bestimmen der Soll-Positionen der ersten Förderguteinheit und der zweiten Förderguteinheit erzeugt werden.

In einer bevorzugten Ausgestaltung des erfindungsgemäßen Verfahrens führt eine Zufuhreinrichtung eine Mehrzahl von einzelnen Förderguteinheiten in einem bulk zu.

Unter dem Begriff bulk wird eine Mehrzahl von ungeordneten Förderguteinheiten verstanden. Es handelt sich insbesondere um eine lose Ansammlung von Förderguteinheiten, die in Form, Abmessungen, Gewicht und Beschaffenheit (z.B. Oberfläche, Material) unterschiedlich sein können. Die Position und Orientierung einer einzelnen Förderguteinheit innerhalb des "bulks" muss keiner definierten Anordnung folgen. Eine einzelne Förderguteinheit kann zu einem oder mehreren anderen Förderguteinheiten Kontakte aufweisen oder die Förderguteinheiten können sich überlappen. Die Förderguteinheiten haben zum Beispiel völlig unterschiedlichen Abstände zueinander und sie können sich berühren oder sie können beispielsweise zusätzlich oder alternativ jeweils unterschiedliche, nicht in Förderrichtung weisende Ausrichtungen ihrer Hauptachsen aufweisen.

Hierdurch wird das Verfahren für eine Vielzahl von Anwendungen verfügbar, die gerade eine nicht geordnete Zufuhr von Förderguteinheiten aufweisen, und insbesondere keine Zufuhr in Einzelreihen hintereinander ("Induction"). Hierdurch sind erhebliche Einsparungen an benötigten Anlageteilen, Anlagenraumbedarf und/oder manueller Arbeit möglich.

In einer Ausgestaltung der Erfindung umfasst das Verfahren zusätzlich nach dem typisierenden Erfassen der Förderguteinheiten und/oder nach dem Bestimmen einer Soll-Position der Förderguteinheit die folgenden Schritte:
- Entscheiden ob eine Bewegung ausgeführt werden muss zur Herstellung einer Soll-Position, dann
- Im Fall einer "Ja"-Entscheidung: Berechnen der Bewegungsrichtung und der Bewegungsstärke,
- Im Fall einer "Nein"-Entscheidung: Förderguteinheit weitertransportieren ohne zusätzliche Bewegung.

Hierdurch lässt sich der Rechenaufwand der Steuerung reduzieren und das Verfahren kann beschleunigt ausgeführt werden.

Weitere vorteilhafte Ausgestaltungen sind Gegenstand der abhängigen Ansprüche und der ausführlichen Beschreibung.

### Kurzdarstellung der Figuren

Nachfolgend wird die Erfindung näher unter Bezugnahme auf in den Figuren gezeigten beispielhaften Ausführungsformen erläutert. In diesen zeigt:
Fig. 1 jeweils eine stark schematisierte Draufsicht einer Ausführungsform des erfindungsgemäßen Fördersystems mit vier verschiedenen Arten bzw. Anordnungen von Fördergutantrieben,
Fig. 2 eine stark schematisierte Prinzipdarstellung der Bewegungen von einer Mehrzahl von Förderguteinheiten in einem Förderabschnitt des erfindungsgemäßen Fördersystems,
Fig. 3 eine weitere stark schematisierte Prinzipdarstellung einer Ausgestaltung der vorliegenden Erfindung anhand von vier zeitlich nacheinander vorliegenden Momentdarstellungen, und
Fig. 4 jeweils ein stark schematisiertes Ablaufschema zweier Ausführungsformen eines erfindungsgemäßen Verfahrens.

Nachfolgend wird die Erfindung eingehender unter Bezugnahme auf die Figuren dargestellt werden. Dabei ist anzumerken, dass unterschiedliche Aspekte beschrieben werden, die jeweils einzeln oder in Kombination zum Einsatz kommen können, d.h. jeglicher Aspekt kann mit unterschiedlichen Ausführungsformen der Erfindung verwendet werden, soweit nicht explizit als reine Alternative dargestellt.

Bei der Beschreibung der Komponenten einer beispielhaften Ausführungsform können Begriffe wie etwa erstes, zweites, A, B, (a), (b) und dergleichen verwendet sein. Die Begriffe sind lediglich zur Unterscheidung der Komponente von anderen gleichartigen Komponenten verwendet und das Wesen, die Folge oder die Reihenfolge der entsprechenden Komponente ist durch die Begriffe nicht beschränkt.

Weiterhin wird nachfolgend der Einfachheit halber in aller Regel immer nur auf eine Entität Bezug genommen werden. Soweit nicht explizit vermerkt, kann die Erfindung aber auch jeweils mehrere der betroffenen Entitäten aufweisen. Insofern ist die Verwendung der Wörter "ein", "eine" und "eines" nur als Hinweis darauf zu verstehen, dass in einer einfachen Ausführungsform zumindest eine Entität verwendet wird.

Figur 1 zeigt in einer stark schematisierten Draufschicht jeweils ein erfindungsgemäßes Fördersystem 10 in vier unterschiedlichen Ausgestaltung 1a, 1b, 1c, 1d des ersten Förderabschnitts mit jeweils unterschiedlich ausgebildeten Fördergutantrieben 11.

In Figur 1a ist ein erfindungsgemäßes Fördersystem 10 zur Erzeugung von Abständen d zwischen einzelnen Förderguteinheiten 11a, 11b, 11c, 11d, 11e, 11f, 11g, 11h, 11i bei gleichzeitigem Transport der Förderguteinheiten in eine Förderrichtung z gezeigt, das eine Zufuhreinrichtung 12 zum Zuführen von einer Mehrzahl von Förderguteinheiten 11 und einen ersten Förderabschnitt 13 aufweist. In Förderrichtung z schließt sich an den ersten Förderabschnitt 13 ein nachfolgender Förderabschnitt 16 an. In der gezeigten Ausführungsform werden die Zufuhreinrichtung 12 und der nachfolgende Förderabschnitt 16 als Rollenförderer dargestellt. Der Förderabschnitt 13 weist in der ersten, hier gezeigten Ausführungsform eine Mehrzahl von darauf befindlichen Förderguteinheiten 11a, 11b, 11c, 11d, 11e, 11f, 11g, 11h, 11i auf, die in die Förderrichtung z bewegt werden. Die Transportbewegung der Förderguteinheiten 11a, 11b, 11c, 11d, 11e, 11f, 11g, 11h, 11i wird durch eine Mehrzahl an Fördergutantrieben 2a, 2b, 2c ausgeführt. Die Fördergutantriebe 2a, 2b, 2c sind als omnidirektionale Allseitenräder ausgebildet. Sie sind in der gezeigten Ausführungsform jeweils zu dritt in einem Fördergutantriebsmodul 17 derart angeordnet, dass ihre Drehrichtungen zueinander in einem 60° Winkel orientiert sind und ein Dreieck bilden. Ihre Rotationsachsen sind damit nicht parallel zueinander ausgerichtet und sie verlaufen nicht parallel zur Förderrichtung z. Jeder Fördergutantrieb 2 kann über einen einzeln steuerbaren Motor verfügen, der kommunikativ mit einer Steuerung 15 verbunden ist und von der Steuerung Signale erhalten kann. In ihrer Dimensionierung sind die Fördergutantriebe 2 kleiner als die zu transportierenden Förderguteinheiten 11. Die Motoren der Fördergutantriebe 2 (nicht gezeigt) können gemäß der Erfindung derart angesteuert werden, dass die Fördergutantriebe 2 in einer Mehrzahl, d.h. zu zweit, zu dritt, zu viert, zu fünft, etc. zusammenwirkend eine Förderguteinheit 11 variabel und individuell in jede Richtung der Förderebene bewegen können. Die Fördergutantriebe (2, 2a..2c) können jeweils einzeln oder in Gruppen mittels eines (einzelnen hierfür jeweils vorgesehenen) Motors angetrieben werden.

Die in der Figur 1 jeweils gezeigten Positionen der Förderguteinheiten 11 stellen eine beispielhafte Momentaufnahme dar, in der die Förderguteinheiten 11 bereits vereinzelt und mit einem Soll-Abstand zueinander auf dem Förderabschnitt 13 vorliegen.

Neben den fördernden Komponenten umfasst das erfindungsgemäße Fördersystem 10 zudem Erfassungsmittel 14 zur typisierenden Erfassung der einzelnen Förderguteinheiten 11. Die hier gezeigten Positionen der beiden gezeigten Erfassungsmittel 14 sind nur beispielhaft. Bevorzugt können optische Sensoren, insbesondere Kameras, besonders bevorzugt 3D-Kameras gekoppelt mit einer Objekt-Erkennungssoftware, eingesetzt. Diese können zum Beispiel in einer möglichst zentralen Position, insbesondere oberhalb der Zufuhreinrichtung und/oder des ersten Förderabschnitts 13 sowie im mittleren oder hinteren Bereich des ersten Förderabschnitts 13 positioniert sein. Die Erfassungsmittel 14 erfassen mindestens den Typ und die relative Lage der Förderguteinheiten 11 zueinander und kommunizieren die erfassten Daten zu der Steuerung 15. Die Steuerung/Regelung 15 erhält außerdem Signale der Mittel (nicht gezeigt) zum Bestimmen einer Soll-Position der Förderguteinheit 11a, 11b, 11c, 11d, 11e, 11f, 11g, 11h, 11i, so dass in Abhängigkeit von diesen Steuerungs-/Regelungssignale an die Fördergutantriebe 2, 2a..2c zum Bewegen der einzelnen Förderguteinheiten 11a, 11b, 11c, 11d, 11e, 11f, 11g, 11h, 11i zur Soll-Position ausgegeben werden, derart, dass die Förderguteinheiten 11b, 11c, 11d, 11e, 11f, 11g, 11h, 11i variabel in jeder Richtung in der Förderebene durch die Fördergutantriebe 2a, ...., 2c bewegbar sind zum Erzeugen des Soll-Abstands. Die im mittleren oder hinteren Bereich des ersten Förderabschnitts 13 positionierten Erfassungsmittel 14 können die bis dahin erreichten Abstände zwischen den Förderguteinheiten erfassen und an die Steuerung senden, so dass in der Art eines Regelkreises bestimmt werden kann, ob die Soll-Positionen bereits erreicht sind oder ob eine weitere Bewegung der Förderguteinheiten initiiert und ausgeführt werden muss.

In Figur 1b ist im Unterschied zu Figur 1a eine Ausführungsform des erfindungsgemäßen Fördersystems 10 schematisch gezeigt, die einen anders ausgestalteten Förderabschnitt 13 aufweist. Die übrigen Komponenten sind jedoch gleichartig ausgebildet. Im Förderabschnitt 13 weist das Fördersystem 10 der Figur 1b wiederum im Verhältnis zu den Förderguteinheiten 11a, 11b, 11c, 11d, 11e, 11f, 11g, 11h, 11i kleiner dimensionierte Fördergutantriebe 2a auf. Die Fördergutantriebe 2a sind in Förderrichtung z neben- und hintereinander angeordnet. Es kann sich beispielsweise um kleinformatige Bandantriebe, Gliederkettenantriebe oder wiederum um Allseitenräder handeln. Die Fördergutantriebe 2a sind nicht in Modulen zusammengefasst, sondern sind beispielsweise fest auf einer Trägerplatte montiert. Jeder Fördergutantrieb 2a weist einen (einzeln) steuerbaren Motor (nicht gezeigt) auf, der den jeweiligen Fördergutantrieb individuell mit unterschiedlicher Geschwindigkeit antreiben kann, insbesondere sowohl in Förderrichtung z als auch entgegen der Förderrichtung z. Aufgrund der kleineren Dimensionierung der Fördergutantriebe 2a als eine Förderguteinheit 11a, 11b, 11c, 11d, 11e, 11f, 11g, 11h oder 11i ist zumindest im Verlauf des Transports in Förderrichtung z stets die Situation gegeben, dass ein Fördergut 11 auf mindestens zwei Fördergutantrieben 2a gleichzeitig aufliegt. Hierdurch kann durch entsprechende unterschiedliche Antriebsgeschwindigkeit und/oder unterschiedliche Antriebsrichtung der beiden betroffenen Fördergutantriebe 2a eine Bewegung in einem Winkel zur Förderrichtung und nicht nur in Förderrichtung auf die Förderguteinheit 11a, 11b, 11c, 11d, 11e, 11f, 11g, 11h oder 11i übertragen werden zur Erzeugung eines Soll-Abstands zwischen den Förderguteinheiten.

In Figur 1c ist eine weitere Ausgestaltung eines erfindungsgemäßen Fördersystems 10 schematisch in einer Draufsicht dargestellt. Im Unterschied zu den Ausführungsformen der Figuren 1a und 1b weist die gezeigte Ausgestaltung der Figur 1c zwei parallel verlaufende nachfolgende Förderabschnitte 16 auf. Daneben sind die Fördergutantriebe 2a, 2b des ersten Förderabschnitts 13 in dieser Ausführungsform jeweils abwechselnd parallel und quer zur Förderrichtung z ausgerichtet und ebenfalls kleiner dimensioniert als die Auflagefläche der Förderguteinheiten. Hierdurch kann eine effiziente individuelle Bewegung auch in jedem Winkel zur Förderrichtung z zusätzlich zu dem Transport in die Förderrichtung auf die einzelnen Förderguteinheiten 11a, 11b, 11c, 11d, 11e, 11f, 11g, 11h, 11i zur Erzeugung eines Soll-Abstands zwischen den Einheiten übertragen werden.

In Figur 1d ist in einer weiteren schematischen Draufsicht eine weitere Ausführungsform des erfindungsgemäßen Fördersystems 10 gezeigt. Auch hier sind zwei parallele nachfolgende Förderabschnitte 16 im Anschluss an den ersten Förderabschnitt 13 vorgesehen. Im Unterschied zu den vorherigen Ausgestaltungen der Fördergutantriebe 2 sind in dieser Ausgestaltung angetriebene Räder 2a vorgesehen, die drehbar und/oder fest auf einer Trägerplatte fixiert sind. Im Fall einer drehbaren Fixierung können die Fördergutantriebe 2a insbesondere gesteuert drehbar sein, zum Beispiel durch einen weiteren steuerbaren Motor (nicht gezeigt), der zusätzlich zu dem Motorantrieb zum Drehen des Rads als Antrieb für den Transport der Förderguteinheiten 11a, 11b, 11c, 11d, 11e, 11f, 11g, 11h, 11i vorgesehen ist. Auch in dieser Ausgestaltung kann sehr effizient eine Bewegung der Förderguteinheiten 2a nicht nur in Förderrichtung z sondern auch variabel in einem Winkel zur Förderrichtung z ausgeführt werden. Auf diese Weise kann in einer sehr kurzen Wegstrecke ein Soll-Abstand zwischen den Förderguteinheiten 11a, 11b, 11c, 11d, 11e, 11f, 11g, 11h, 11i zuverlässig und variabel erzeugt werden.

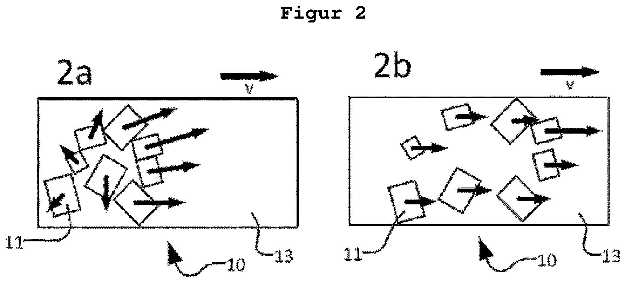

In Figur 2 wird in einer stark schematisierten Skizze das Bewegungsprinzip der Erzeugung eines Soll-Abstands d zwischen einzelnen Förderguteinheiten 11 durch die erfindungsgemäße Vorrichtung bzw. durch das erfindungsgemäße Verfahren näher dargestellt. Zur besseren Übersicht sind nur die Förderguteinheiten 11 und ihre Bewegungsvektoren im ersten Förderabschnitt des Fördersystems 10 jeweils in einer "vorher" und einer "nachher" Momentaufnahme gezeigt.

In der in Figur 2a dargestellten Ausgangssituation sind die Förderguteinheiten 11 im bulk zugeführt worden und von den Erfassungsmitteln zum typisierenden Erfassen der Förderguteinheiten erfasst worden. Zusammen mit den Mitteln zum Bestimmen einer Soll-Position einer Förderguteinheit hat die Steuerung/Regelung Bewegungsrichtungen und Bewegungsstärke für die einzelnen Förderguteinheiten 11 zur Erzeugung der Soll-Abstände zwischen den Förderguteinheiten 11 individuell bestimmt, welche hier anhand von Bewegungsvektoren schematisch dargestellt sind und welche durch entsprechende Steuersignale an die Motoren der Fördergutantriebe (hier nicht gezeigt) ausgeführt werden. Die Förderguteinheiten 11 werden wie gezeigt nicht nur in Förderrichtung z bewegt, sondern auch individuell in einem Winkel zur Förderrichtung, wobei zusätzlich unterschiedliche Fördergeschwindigkeiten, welche hier als Länge der Vektorpfeile angedeutet sind, vorgesehen werden. Auf diese Weise ist es erfindungsgemäß möglich, in einer sehr kurzen Wegstrecke des ersten Förderabschnitts die geforderten Soll-Abstände zwischen den meisten der Förderguteinheiten 11 zu erzeugen, wie es in der Figur 2b nach Ausführen der in Figur 2a gezeigten Bewegungen dargestellt ist. Nunmehr liegt nur noch zwischen den beiden oberen vorderen Förderguteinheiten kein ausreichender Soll-Abstand vor, was durch eine weitere Bewegung wie durch die Bewegungsvektoren in der Figur 2b angedeutet noch erledigt wird. Alle übrigen Fördereinheiten können mit jeweils angepassten Fördergeschwindigkeiten (durch die Länge der Vektorpfeile dargestellt) in Förderrichtung weiter transportiert werden, da ihr Abstand zueinander bereits dem Soll-Abstand entspricht. Es ist daher nicht zwingend vorgesehen, dass alle Soll-Abstände in einer ersten Bewegung hergestellt werden müssen, es kann auch im Verlauf des Transports eine zweite bzw. mehrere weitere Bewegung(en) zur Erzeugung von restlichen herzustellenden Soll-Abständen bestimmt und ausgeführt werden.

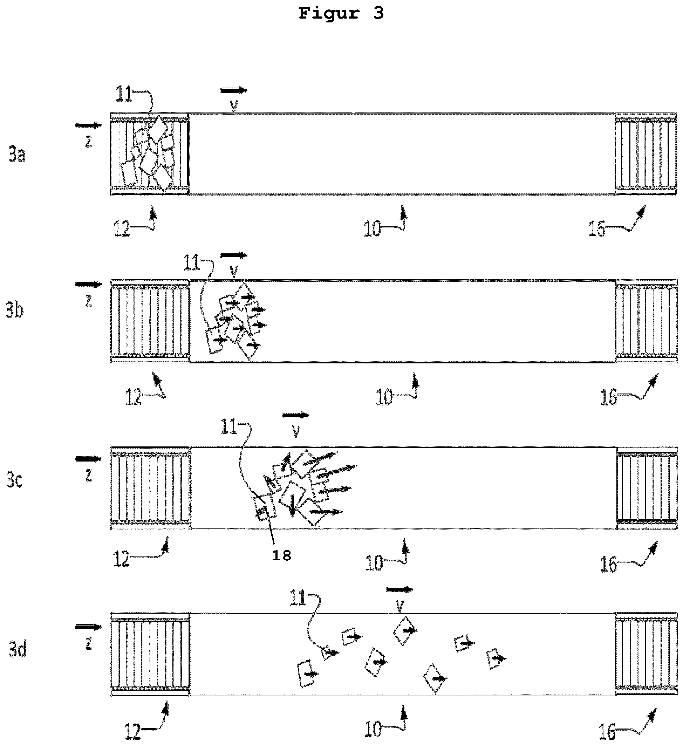

In Figur 3 werden in vier ebenfalls stark schematisierten Draufsichten jeweils konsekutive Momentaufnahmen eines erfindungsgemäßen Verfahrens zur Erzeugung von Soll-Abständen zwischen Förderguteinheiten 11 mittels einer bevorzugten Ausgestaltung des erfindungsgemäßen Fördersystems 10 gezeigt.

In Figur 3a werden Förderguteinheiten 11 mittels einer Zufuhreinrichtung 12 in Richtung eines ersten Förderabschnitts 13 zugeführt. Die Förderguteinheiten 11 liegen ungeordnet mit teils sehr kleinen Abständen zueinander im "bulk" auf der Zufuhreinrichtung 12. Teilweise können sich die Förderguteinheiten 11 sogar berühren. Das Fördersystem 10 soll die Förderguteinheiten in Förderrichtung z mit einer Ist-Geschwindigkeit v, wie als Bewegungspfeil oberhalb angedeutet, transportieren zu einem nachgelagerten Förderabschnitt 16 (vgl. Figur 1). Dies veranschaulicht die Ausgangssituation des erfindungsgemäßen Verfahrens. Alle nur schematisiert gezeigten Komponenten des Fördersystems 10 können wie vorstehend beschrieben ausgebildet sein.

In Figur 3b liegen die Förderguteinheiten 11 an dem der Zufuhreinheit 12 zugewandten Ende des ersten Förderabschnitts 13 vor. Hier werden sie zunächst typisierend beispielsweise von einem oder mehreren Sensoren (nicht dargestellt) erfasst, wobei die Typisierung auch bereits in dem vorangegangenen Abschnitt (vgl. Positionen in Figur 3a) erfolgen kann und dort sowohl bereits abgeschlossen sein kann als auch in dem in der vorliegenden Figur 3b gezeigten Stadium noch fortgesetzt werden kann. Anhand der erfassten typisierenden Daten wird für jede Förderguteinheit 11 eine Soll-Position bestimmt, welches in der Regel durch eine Software, zum Beispiel durch einen Algorithmus oder durch eine selbstlernende Kl-Routine, in der Steuerung ausgeführt wird.

Vor der Bestimmung der Soll-Position kann als weiterer Schritt folgen, dass entschieden wird, ob eine Bewegung ausgeführt werden muss zur Herstellung einer Soll-Position, und sich dann folgendes anschließt:
- im Fall einer "Ja"-Entscheidung: Berechnen der Bewegungsrichtung und der Bewegungsstärke, oder
- im Fall einer "Nein"-Entscheidung: Förderguteinheit weitertransportieren ohne zusätzliche Bewegung.

Mit den Daten der typisierenden Erfassung und den Daten der Soll-Position ist die Steuerung nun in der Lage, zum Bewegen der Förderguteinheiten 11 zu ihren Soll-Positionen Steuersignale an die Fördergutantriebe (nicht gezeigt) des ersten Förderabschnitts 13 zu senden, die zunächst den Transport der Förderguteinheiten 11 mit einer Ist-Geschwindigkeit v ausführen.

In einem nachfolgenden Abschnitt des ersten Förderabschnitts werden anhand der ermittelten Soll-Positionen Signale gesendet, die sowohl den Transport in Förderrichtung z mit einer Ist-Geschwindigkeit v sicherstellen als auch Bewegungen in verschiedene, in jedem Winkel zu der Förderrichtung z weisende Richtungen und unterschiedliche Bewegungsstärken (Länge der Pfeile 18) auszulösen wie in Figur 3c durch die Bewegungspfeile 18 für jede Fördereinheit 11 dargestellt.

In Figur 3c ist nämlich gezeigt, dass zu dem Zweck der Erzeugung von Soll-Abständen zwischen den Förderguteinheiten 11 ein Bewegen von einzelnen Förderguteinheiten 1 durch Fördergutantriebe (hier nicht gezeigt, vgl. vorstehende Ausführungen, insbesondere zu Figur 1) erfolgt, die eine oder mehrere Förderguteinheiten 11 in jede Richtung der Förderebene bewegen können, und zwar derart, dass die Soll-Abstände zwischen den Förderguteinheiten 11 spätestens bei dem Übertritt in einen nachfolgenden Förderabschnitt vorliegen. Das Bewegen erfolgt jeweils in Abhängigkeit von Steuersignalen, die aus dem typisierenden Erfassen der Förderguteinheiten 11 und dem Bestimmen der Soll-Positionen der Förderguteinheiten 11 erzeugt werden. Wie hier durch die Bewegungspfeile 18 für jede Fördereinheit 11 dargestellt, werden die Bewegungen für jede Förderguteinheit 11 individuell in verschiedenen, in Winkeln zu der Förderrichtung z weisenden Richtungen und zudem mit unterschiedlichen Bewegungsstärken (Länge der Pfeile 18) durch die erfindungsgemäße Vorrichtung 10 durchgeführt.

In Figur 3d schließlich sind die Soll-Abstände zwischen den Förderguteinheiten 11 erzeugt und die Förderguteinheiten 11 werden dementsprechend in Förderrichtung z mit der Ist-Geschwindigkeit v, welche nun kleiner, aber bevorzugt gleich oder größer sein kann als die Eingangs-Ist-Geschwindigkeit v, zu dem nachfolgenden Förderabschnitt 16 transportiert, ohne ihre relative Lage zueinander bei diesem Weitertransport zu verändern.

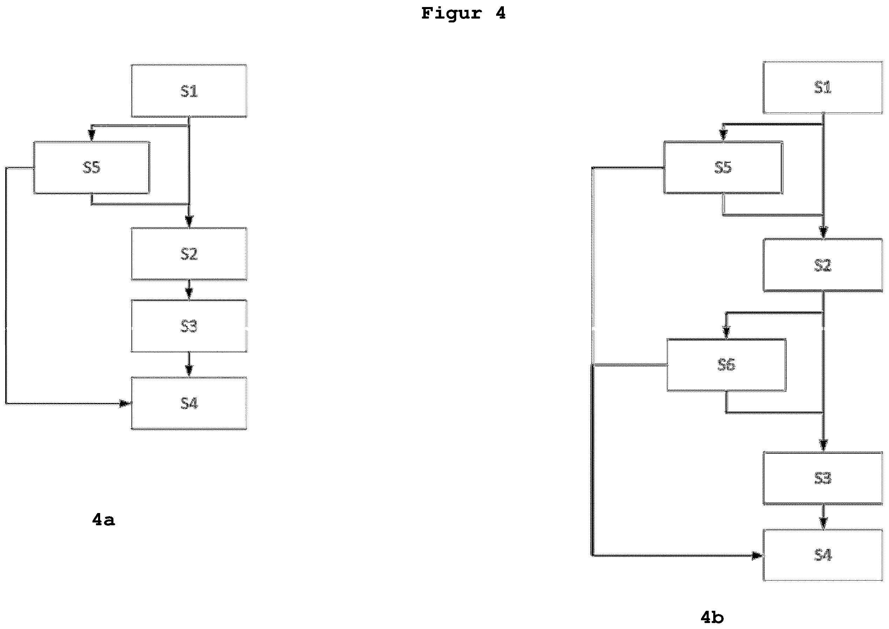

In Figur 4 ist jeweils ein stark schematisiertes Ablaufschema zweier Ausführungsformen eines erfindungsgemäßen Verfahrens skizziert.

In Figur 4a ist ein stark schematisiertes Ablaufschema einer Ausführungsform des erfindungsgemäßen Verfahrens dargestellt.

In Schritt S1 erfolgt ein typisierendes Erfassen der Förderguteinheiten. Der Schritt 1 kann bereits während der Zufuhr der Förderguteinheiten oder in einem ersten Unterabschnitt des ersten Förderabschnitts erfolgen.

Anhand der erfassten typisierenden Daten wird für jede Förderguteinheit in Schritt S2 eine Soll-Position bestimmt, welches in der Regel durch eine Software, zum Beispiel durch einen Algorithmus oder durch eine selbstlernende Kl-Routine, in der Steuerung ausgeführt wird.

In Schritt S3 erfolgt ein Steuern oder Regeln eines Soll-Abstands d zwischen einzelnen Förderguteinheiten anhand der besagten Soll-Position. Zu diesem Zweck werden die einzelnen Förderguteinheiten durch Fördergutantriebe bewegt, die eine oder mehrere Förderguteinheiten in jede Richtung der Förderebene bewegen können, und zwar derart, dass die Soll-Abstände d zwischen den Förderguteinheiten bei dem Übertritt in einen nachfolgenden Förderabschnitt vorliegen. Erfindungsgemäß erfolgt das Bewegen in Abhängigkeit von Steuersignalen, die aus dem typisierenden Erfassen der Förderguteinheiten und dem Bestimmen der Soll-Positionen der Förderguteinheiten erzeugt werden.

In Schritt S4 ist die Bewegung der Förderguteinheiten zur Erzeugung der Soll-Abstände abgeschlossen und die Förderguteinheiten werden in Förderrichtung zu einem nachfolgenden Förderabschnitt transportiert bzw. an diesen übergeben.

Vor der Bestimmung der Soll-Position in Schritt S2 kann als weiterer Schritt S5 folgen, dass entschieden wird, ob eine Bewegung ausgeführt werden muss zur Herstellung einer Soll-Position, und sich dann folgendes anschließt:
- im Fall einer "Ja"-Entscheidung: Berechnen der Bewegungsrichtung und der Bewegungsstärke als Schritt S2, oder
- im Fall einer "Nein"-Entscheidung: Förderguteinheit weitertransportieren ohne zusätzliche Bewegung als Schritt S4.

In Figur 4b ist eine alternative Ausführungsform des erfindungsgemäßen Verfahrens skizziert. Alternativ oder kumulativ zu dem in Figur 4a gezeigten Ablauf kann auch nach dem Schritt S2, d.h. nach dem Bestimmen der Soll-Position, ein Entscheidungsschritt S6 folgen, in dem entschieden wird, ob eine Bewegung ausgeführt werden muss zur Herstellung einer Soll-Position, in dem folgendes ausgeführt wird:
- Vergleichen der berechneten Soll-Position mit einer ermittelten Ist-Position einer Förderguteinheit,
- im Fall eines Unterschieds Ist-Position/Soll-Position größer als ein voreingestellter Schwellenwert: weiter mit Schritt S3, d.h. Steuern oder Regeln eines Soll-Abstands d zwischen einzelnen Förderguteinheiten anhand der besagten Soll-Position,
- im Fall eines Unterschieds Ist-Position/Soll-Position kleiner als ein voreingestellter Schwellenwert: Förderguteinheit weitertransportieren ohne zusätzliche Bewegung als Schritt S4.

## Patentansprüche

1. Verfahren zur Erzeugung von Abständen (d) zwischen einer ersten Förderguteinheit (11) und einer zweiten Förderguteinheit bei gleichzeitigem Transport der Förderguteinheiten in eine Förderrichtung (z), umfassend die folgenden Schritte:
- Zuführen von einer Mehrzahl zumindest der ersten Förderguteinheit (11) und der zweiten Förderguteinheit in einer ersten Anordnung, wobei die erste Förderguteinheit (11) und die zweite Förderguteinheit abschnittsweise gleichzeitig in Förderrichtung (z) zugeführt werden, und wobei die Förderguteinheiten orthogonal zur Förderrichtung (z) zueinander versetzt zugeführt werden und einen ersten Abstand zueinander aufweisen,
- typisierendes Erfassen (S1) der Förderguteinheiten (11),
- Bestimmen einer Soll-Position der ersten Förderguteinheit (11a..11d) und der zweiten Förderguteinheit (S2),
- Steuern oder Regeln eines Soll-Abstands (d) zwischen der ersten Förderguteinheit (11a..11d) und der zweiten Förderguteinheit anhand der besagten Soll-Position (S3), und
- zu diesem Zweck Bewegen von einzelnen Förderguteinheiten (11a..11d) (S4) durch Fördergutantriebe (2, 2a..2c), die eine oder mehrere Förderguteinheiten in jede Richtung der Förderebene variabel und individuell bewegen können, und zwar derart, dass der Soll-Abstand (d) zwischen der ersten Förderguteinheit (11a..11d) und der zweiten Förderguteinheit bei dem Übertritt in einen nachfolgenden Förderabschnitt (16) vorlieget wobei der Soll-Abstand (d) unterschiedlich ist vom ersten Abstand, das Bewegen in Abhängigkeit von Steuersignalen, die aus dem typisierenden Erfassen (S1) der ersten Förderguteinheit(11a...11d) und der zweiten Förderguteinheit und dem Bestimmen der Soll-Positionen der ersten Förderguteinheit (11a... 11d) und der zweiten Förderguteinheit (S2) erzeugt werden, wobei die erste Förderguteinheit und die zweite Förderguteinheit zugleich in die Förderrichtung (z) transportiert werden.

2. Verfahren nach Anspruch 1, wobei eine Zufuhreinrichtung (12) eine Mehrzahl von einzelnen Förderguteinheiten (11a .... 11d) in einem bulk zuführt.

3. Verfahren nach einem der Ansprüche 1 bis 2, wobei das Verfahren zusätzlich nach dem typisierenden Erfassen der ersten Förderguteinheit (11a..11d) und der zweiten Förderguteinheit (S1) und/oder nach dem Bestimmen von Soll-Positionen der ersten Förderguteinheit (11a..11d) und der zweiten Förderguteinheit (S2) die folgenden Schritte umfasst:
- Entscheiden (S5) ob eine Bewegung ausgeführt werden muss zur Herstellung einer Soll-Position, dann
- Im Fall einer "Ja"-Entscheidung: Berechnen der Bewegungsrichtung und der Bewegungsstärke (S2),
- Im Fall einer "Nein"-Entscheidung: Förderguteinheit weitertransportieren ohne zusätzliche Bewegung (S4).

4. Fördersystem (10) zur Erzeugung von Abständen (d) zwischen einer ersten Förderguteinheit (11) und einer zweiten Förderguteinheit bei gleichzeitigem Transport der Förderguteinheiten in eine Förderrichtung (z), umfassend:
- eine Zufuhreinrichtung (12) zum Zuführen von einer zumindest der ersten Förderguteinheit (11) und der zweiten Förderguteinheit, wobei die erste Förderguteinheit und die zweite Förderguteinheit einen ersten Abstand aufweisen,
- einen oder mehrere nachfolgende Förderabschnitte (13) mit mehreren, in der Förderrichtung (z) örtlich hintereinander und nebeneinander liegenden Fördergutantrieben (2, 2a..2c) zum Transport der Förderguteinheiten (11a..11d) mit einer Ist-Geschwindigkeit,
- Erfassungsmittel (14) zum typisierenden Erfassen der einzelnen Förderguteinheiten (11),
- Mittel zum Bestimmen einer Soll-Position der ersten Förderguteinheit und der zweiten Förderguteinheit,
- eine Steuerung/Regelung (15) zum Steuern oder Regeln eines Soll-Abstands (d) zwischen der ersten Förderguteinheit (11a..11d) und der zweiten Förderguteinheit anhand der besagten Soll-Position, **dadurch gekennzeichnet, dass**
- die Fördergutantriebe (2, 2a..2c) derart ausgebildet und eingerichtet sind, dass sie einzeln oder in einer Mehrzahl zusammenwirkend die einzelnen Förderguteinheiten (11) in jede Richtung in der Förderebene derart bewegen können, dass der Soll-Abstand (d) zwischen der ersten Förderguteinheit und der zweiten Förderguteinheit (11a..11d) bei dem Übertritt in einen nachfolgenden Förderabschnitt (16) vorliegt, wobei der Soll-Abstand (d) unterschiedlich ist vom ersten Abstand, wobei
- die Fördergutantriebe (2, 2a...2c) jeweils einzeln mittels eines Motors angetrieben und einzeln durch die Steuerung/Regelung steuerbar sind, und wobei
- die Erfassungsmittel (14) ein Signal an die Steuerung/Regelung mit Informationen zu Eigenschaften der ersten Förderguteinheit (11a..11d) und der zweiten Förderguteinheit senden können, die Steuerung/Regelung Signale der Mittel zum Bestimmen einer Soll-Position der ersten Förderguteinheit (11a..11d) und der zweiten Förderguteinheit erhält und in Abhängigkeit von diesen Signalen Steuerungs-/Regelungssignale an die Fördergutantriebe (2, 2a..2c) zum Bewegen der ersten Förderguteinheit und der zweiten Förderguteinheit (11a..11d) zur Soll-Position ermittelt und ausgibt, derart, dass die erste Förderguteinheit (11a..11d) und die zweite Förderguteinheit individuell variabel in jeder Richtung in der Förderebene durch die Fördergutantriebe (2, 2a, ...., 2c) bewegbar sind zum Erzeugen des Soll-Abstands (d), wobei die erste Förderguteinheit und die zweite Förderguteinheit zugleich in die Förderrichtung (z) transportiert werden, wobei zumindest zwei Rotationsachsen der Fördergutantriebe (2, 2a..2c) eines Antriebsmoduls (17) nicht orthogonal zur Förderrichtung (z) angeordnet sind.

5. Fördersystem (10) nach Anspruch 4, wobei die Fördergutantriebe (2, 2a..2c) in mehreren Antriebsmodulen (17) angeordnet sind, so dass ein Antriebsmodul (17) jeweils zwei oder drei oder vier Fördergutantriebe (2a, 2b, 2c) umfasst.

6. Fördersystem (10) nach Anspruch 5, wobei die Rotationsachsen der Fördergutantriebe (2, 2a..2c) eines Antriebsmoduls (17) entweder parallel oder bevorzugt nicht parallel zueinander angeordnet sind.

7. Fördersystem (10) nach einem der vorhergehenden Ansprüche 4 bis 6, wobei die Rotationsachsen der Fördergutantriebe (2, 2a..2c) eines Antriebsmoduls (17) nicht parallel und/oder nicht orthogonal zur Förderrichtung (z) angeordnet sind.

8. Fördersystem (10) nach einem der vorhergehenden Ansprüche 4 bis 7, wobei die Fördergutantriebe (2, 2a..2c) kleiner dimensioniert sind als die Auflagefläche einer Förderguteinheit (11).

9. Fördersystem (10) nach einem der vorhergehenden Ansprüche 4 bis 8, wobei die Fördergutantriebe (2, 2a..2c) in Gruppen von einem Motor gemeinsam angetrieben werden.

10. Fördersystem (10) nach einem der vorhergehenden Ansprüche 4 bis 9, wobei die Fördergutantriebe (2, 2a..2c) des ersten Förderabschnitts (13) drehbar gelagert sind.

11. Fördersystem (10) nach Anspruch 10, wobei die Fördergutantriebe (2, 2a..2c) gesteuert individuell drehbar sind.

12. Fördersystem (10) nach einem der vorhergehenden Ansprüche 4 bis 11, wobei die Erfassungsmittel zum typisierenden Erfassen der Förderguteinheiten Sensoren, Lichtschranken, Kameras, Photodioden, Radareinrichtungen, ID-Lesegeräte zum Lesen von aufgedruckten Codes oder Kombinationen davon sind.

13. Fördersystem (10) nach einem der vorhergehenden Ansprüche 4 bis 12, wobei die Mittel zum Bestimmen einer Soll-Position einer Förderguteinheit (11a..11d) ein Computerprogrammprodukt sind.

14. Fördersystem (10) nach einem der vorhergehenden Ansprüche 4 bis 13, wobei die Steuerung/Regelung zum Steuern oder Regeln eines Soll-Abstands (d) zwischen einzelnen Förderguteinheiten (11a..11d) anhand der besagten Soll-Position Steuersignale zu mindestens zwei benachbarten, bevorzugt mindestens drei benachbarten, besonders bevorzugt mindestens vier benachbarten Fördergutantrieben umfasst.

15. Fördersystem (10) nach einem der vorhergehenden Ansprüche 4 bis 14, wobei das Fördersystem Mittel zum Überprüfen der erzielten Soll-Abstände (d) umfasst.

## Claims

1. Method for establishing distances (d) between a first conveyed-good unit (11) and a second conveyed-good unit during the simultaneous transport of the conveyed-good units in one conveying direction (z), comprising the following steps:
- feeding of a plurality of at least the first conveyed-good unit (11) and the second conveyed-good unit in a first arrangement, wherein the first conveyed-good unit (11) and the second conveyed-good unit are fed in sections simultaneously in the conveying direction (z), and wherein the conveyed-good units are fed orthogonally offset to each other in relation to the conveying direction (z) and comprise a first distance to one another,
- typifying detection (S1) of the conveyed-good units (11),
- determining a target position of the first conveyed-good unit (11a..11d) and the second conveyed-good unit (S2),
- controlling or regulating a target distance (d) between the first conveyed-good unit (11a..11d) and the second conveyed-good unit on the basis of the said target position (S3), and
- for this purpose, moving the single first conveyed-good units (11a..11d) (S4) and the second conveyed-good unit using conveyor drives (2, 2a..2c), which can move one or a plurality of conveyed-good units individually and in a variable manner in any direction of the conveying level in such a way that the target distance (d) between the first conveyed-good unit (11a..11d) and the second conveyed-good unit exists at the time of transfer to a subsequent conveyor section (16), wherein the target distance (d) is different from the first distance, the movement is dependent on control signals generated from the typifying detection (S1) of the first conveyed-good unit (11a..11d) and the second conveyed-good unit and generated from the determination of the target positions of the first conveyed-good unit (11a..11d) and the second conveyed-good unit (S2), wherein the first conveyed-good unit and the second conveyed-good unit are transported simultaneously in the conveying direction (z).

2. The method according to claim 1, wherein a feeding device (12) feeds a plurality of individual conveyed-good units (11a....11d) in bulk.

3. Method according to one of claims 1 to 2, wherein the method, after the typifying detection of the first conveyed-good unit (11a..11d) and the second conveyed-good unit (S1) and/or after determining the target positions of the first conveyed-good unit (11a..11d) and the second conveyed-good unit (S2), additionally comprises the following steps:
- deciding (S5) whether a movement must be executed to create a target position, then,
- in the case of a "yes" decision: calculating the movement direction and the strength of movement (S2),
- in the case of a "no" decision: continuing to transport the conveyed-good unit without additional movement (S4).

4. Conveyor system (10) for establishing distances (d) between a first conveyed-good unit (11) and a second conveyed-good unit during the simultaneous transport of the conveyed-good units in one conveying direction (z), comprising:
- a feeding device (12) for feeding at least one first conveyed-good unit (11) and the second conveyed-good unit, wherein the first conveyed-good unit and the second conveyed-good unit comprise a first distance,
- one or a plurality of subsequent conveyor sections (13) with a plurality of conveyor drives located in the conveying direction (z) localized one behind the other and next to each other (2, 2a..2c) for the transport of the conveyed-good units (11a..11d) at an actual velocity,
- detection means (14) for the typifying detection of the individual conveyed-good units (11),
- means of determining a target position of the first conveyed-good unit and the second conveyed-good unit,
- a control system / regulator (15) for controlling or regulating a target distance (d) between of the first conveyed-good unit (11a..11d) and the second conveyed-good unit on the basis of the said target position **characterized in that**
- the conveyor drives (2, 2a..2c) are designed and arranged in such a way that they can move the individual conveyed-good units (11) in any direction on the conveying level, individually or jointly in a plurality in such a way that the target distance (d) between of the first conveyed-good unit and the second conveyed-good unit (11a..11d) exists at the time of its transfer to a subsequent conveyor section (16), wherein the target distance (d) is different from the first distance, wherein
- the conveyor drives (2, 2a...2c) are individually driven by a motor and individually controllable by the control system, and wherein:
- the detection means (14) can send a signal to the control system with information on the characteristics of the first conveyed-good unit (11a..11d) and the second conveyed-good unit, the control system receives signals of the means for determining a target position of the first conveyed-good unit (11a..11d) and the second conveyed-good unit and, depending on these signals, identifies and outputs control signals to the conveyor drives (2, 2a..2c) for moving the first conveyed-good unit and the second conveyed-good unit (11a..11d) to the target position in such a way that the first conveyed-good unit (11a..11d) and the second conveyed-good unit can be individually moved in a variable manner in each direction on the conveying level by the conveyor drives (2, 2a,...., 2c) to establish the target distance, wherein the first conveyed-good unit and the second conveyed-good unit are simultaneously transported in the conveying direction (z), wherein at least two rotational axes of the conveyor drives (2, 2a..2c) of a drive module (17) are not arranged orthogonally to the conveying direction (z).

5. Conveyor system (10) according to claim 4, wherein the conveyor drives (2, 2a..2c) are arranged in a plurality of drive modules (17) so that one drive module (17) comprises two or three or four conveyor drives (2a, 2b, 2c).

6. Conveyor system (10) according to claim 5, wherein the rotational axes of the conveyor drives (2, 2a..2c) of a drive module (17) are either parallel or, preferably, not parallel to each other.

7. Conveyor system (10) according to any one of the preceding claims 4 to 6, wherein the rotational axes of the conveyor drives (2, 2a..2c) of a drive module (17) are not parallel and/or not orthogonal to the conveying direction (z).

8. Conveyor system (10) according to any one of the preceding claims 4 to 7, wherein the conveyor drives (2, 2a..2c) are smaller than the contact surface of a conveyed-good unit (11).

9. Conveyor system (10) according to any one of the preceding claims 4 to 8, wherein the conveyor drives (2, 2a..2c) are cumulatively driven in groups by one motor.

10. Conveyor system (10) according to any one of the preceding claims 4 to 9, wherein the conveyor drives (2, 2a..2c) of the first conveyor section (13) are rotatably mounted.

11. Conveyor system (10) according to claim 10, wherein the conveyor drives (2, 2a..2c) can be individually rotated in a controlled manner.

12. Conveyor system (10) according to any one of the preceding claims 4 to 11, wherein the detection means for the typifying detection of the conveyed-good units are sensors, photoelectric devices, cameras, photodiodes, radar devices, ID readers for reading printed codes or combinations thereof.

13. Conveyor system (10) according to any one of the preceding claims 4 to 12, wherein the means for determining a target position of a conveyed-good unit (11a..11d) are a computer-program product.

14. Conveyor system (10) according to any one of the preceding claims 4 to 13, wherein the control system / regulator for controlling or regulating a target distance (d) between individual conveyed-good units (11a..11d) on the basis of the said target position, comprises control signals to at least two adjacent, preferably at least three adjacent, and preferably at least four adjacent conveyor drives.

15. Conveyor system (10) according to any one of the preceding claims 4 to 14, wherein the conveyor system comprises means of verifying the target distances achieved.

## Revendications

1. Procédé pour établir des distances (d) entre une première unité de marchandise transportée (11) et une deuxième unité de marchandise transportée pendant le transport simultané des unités de marchandise transportées dans une direction de transport (z), comprenant les étapes suivantes :
- alimenter d'une pluralité d'au moins la première unité de marchandise transportée (11) et la deuxième unité de marchandise transportée dans un premier agencement, dans lequel la première unité de marchandise transportée (11) et la deuxième unité de marchandise transportée sont alimentées par sections simultanément dans la direction de transport (z), et dans lequel les unités de marchandises transportées sont alimentées de manière décalée orthogonalement par rapport à la direction de transport (z) les unes par rapport aux autres et comprennent une première distance les unes par rapport aux autres,
- typifier (S1) des unités de marchandises transportées (11),
- déterminer d'une position cible de la première unité de marchandise transportée (11a..11d) et de la deuxième unité de marchandise transportée (S2),
- contrôler ou réguler une distance cible (d) entre la première unité de marchandise transportée (11a..11d) et la deuxième unité de marchandise transportée sur la base de ladite position cible (S3), et
- à cette fin, déplacer les premières unités de marchandises transportées (11a..11d) (S4) et la deuxième unité de marchandises transportées à l'aide d'entraînements de convoyeur (2, 2a..2c), qui peuvent déplacer une ou plusieurs unités de marchandises transportées individuellement et de manière variable dans n'importe quelle direction du niveau de transport, de telle sorte qu'une distance cible (d) entre les premières unités de marchandises transportées (11a..11d) et la deuxième unité de marchandises transportées existe au moment du transfert vers une section de convoyeur suivante (16), la distance cible (d) étant différente de la première distance, le déplacement dépendant de signaux de commande générés à partir de la détection de typage (S1) de la première unité de marchandises transportées (11a..11d) et de la deuxième unité de marchandises transportées et générés à partir de la détermination des positions cibles de la première unité de marchandises transportées (11a..11d) et de la deuxième unité de marchandises transportées (S2), la première unité de marchandises transportées et la deuxième unité de marchandises transportées étant transportées simultanément dans la direction de transport (z).

2. Procédé selon la revendication 1, dans lequel un dispositif d'alimentation (12) alimente une pluralité d'unités de marchandises transportées individuelles (11a....11d) en vrac.

3. Procédé selon l'une des revendications 1 à 2, dans lequel le procédé, après la détection typique de la première unité de marchandise transportée (11a..11d) et de la deuxième unité de marchandise transportée (S1) et/ou après avoir déterminé les positions cibles de la première unité de marchandise transportée (11a..11d) et de la deuxième unité de marchandise transportée (S2), comprend en outre les étapes suivantes :
- décider (S5) si un mouvement doit être exécuté pour créer une position cible, puis,
- en cas de décision « oui » : calculer la direction du mouvement et la force du mouvement (S2),
- en cas de décision « non » : continuer à transporter l'unité de marchandises transportées sans mouvement supplémentaire (S4).

4. Système de convoyage (10) pour établir des distances (d) entre une première unité de marchandise transportée (11) et une deuxième unité de marchandise transportée pendant le transport simultané des unités de marchandise transportées dans une direction de transport (z), comprenant :
- un dispositif d'alimentation (12) pour alimenter au moins une première unité de marchandise transportée (11) et la deuxième unité de marchandise transportée, dans lequel la première unité de marchandise transportée et la deuxième unité de marchandise transportée comprennent une première distance,
- une ou plusieurs sections de convoyeur successives (13) avec plusieurs entraînements de convoyeur situés dans la direction de transport (z), localisés les uns derrière les autres et les uns à côté des autres (2, 2a..2c) pour le transport des unités de marchandises transportées (11a..11d) à une vitesse réelle,
- des moyens de détection (14) pour la détection typique des différentes unités de marchandises transportées (11),
- des moyens de détermination d'une position cible de la première unité de marchandise transportée et de la deuxième unité de marchandise transportée,
- un système de commande/régulateur (15) pour commander ou réguler une distance cible (d) entre la première unité de marchandise transportée (11a..11d) et la deuxième unité de marchandise transportée sur la base de ladite position cible, **caractérisé en ce que**
- les entraînements de convoyeur (2, 2a..2c) sont conçus et agencés de telle manière qu'ils peuvent déplacer conjointement les unités de marchandises transportées individuelles (11) dans n'importe quelle direction sur le niveau de transport, individuellement ou en pluralité, de telle manière que la distance cible (d) entre la première unité de marchandises transportées et la deuxième unité de marchandises transportées (11a..11d) existe au moment de son transfert vers une section de convoyeur suivante (16), la distance cible (d) étant différente de la première distance, dans lequel
- les entraînements de convoyeur (2, 2a...2c) sont entraînés individuellement par un moteur et peuvent être commandés individuellement par le système de commande, et dans lequel :
- le moyen de détection (14) peut envoyer un signal au système de commande avec des informations sur les caractéristiques de la première unité de marchandise transportée (11a..11d) et de la deuxième unité de marchandise transportée, le système de commande reçoit des signaux des moyens pour déterminer une position cible de la première unité de marchandise transportée (11a..11d) et de la deuxième unité de marchandise transportée et, en fonction de l' e de ces signaux, identifie et émet des signaux de commande aux entraînements de convoyeur (2, 2a..2c) pour déplacer la première unité de marchandises transportées et la deuxième unité de marchandises transportées (11a..11d) vers la position cible de telle manière que la première unité de marchandises transportées (11a..11d) et la deuxième unité de marchandises transportées puissent être déplacées individuellement de manière variable dans chaque direction sur le niveau de transport par les entraînements du convoyeur (2, 2a,...., 2c) afin d'établir la distance cible, dans lequel la première unité de marchandise transportée et la deuxième unité de marchandise transportée sont transportées simultanément dans la direction de transport (z), dans lequel au moins deux axes de rotation des entraînements de convoyeur (2, 2a..2c) d'un module d'entraînement (17) ne sont pas disposés orthogonalement à la direction de transport (z).

5. Système de convoyage (10) selon la revendication 4, dans lequel les entraînements de convoyeur (2, 2a..2c) sont disposés dans une pluralité de modules d'entraînement (17) de telle sorte qu'un module d'entraînement (17) comprend deux, trois ou quatre entraînements de convoyeur (2a, 2b, 2c).

6. Système de convoyage (10) selon la revendication 5, dans lequel les axes de rotation des entraînements de convoyage (2, 2a..2c) d'un module d'entraînement (17) sont soit parallèles, soit, de préférence, non parallèles les uns aux autres.

7. Système de convoyage (10) selon l'une quelconque des revendications 4 à 6 précédentes, dans lequel les axes de rotation des entraînements de convoyeur (2, 2a..2c) d'un module d'entraînement (17) ne sont pas parallèles et/ou ne sont pas orthogonaux à la direction de convoyage (z).

8. Système de convoyage (10) selon l'une quelconque des revendications 4 à 7 précédentes, dans lequel les entraînements de convoyage (2, 2a..2c) sont plus petits que la surface de contact d'une unité de marchandise convoyée (11).

9. Système de convoyage (10) selon l'une quelconque des revendications 4 à 8 précédentes, dans lequel les entraînements de convoyeur (2, 2a..2c) sont entraînés cumulativement en groupes par un seul moteur.

10. Système de convoyage (10) selon l'une quelconque des revendications 4 à 9 précédentes, dans lequel les entraînements de convoyeur (2, 2a..2c) de la première section de convoyeur (13) sont montés de manière rotative.

11. Système de convoyage (10) selon la revendication 10, dans lequel les entraînements de convoyeur (2, 2a..2c) peuvent être tournés individuellement de manière contrôlée.

12. Système de convoyage (10) selon l'une quelconque des revendications 4 à 11 précédentes, dans lequel les moyens de détection pour la détection typique des unités de marchandises transportées sont des capteurs, des dispositifs photoélectriques, des caméras, des photodiodes, des dispositifs radar, des lecteurs d'identification pour lire des codes imprimés ou des combinaisons de ceux-ci.

13. Système de convoyage (10) selon l'une quelconque des revendications 4 à 12 précédentes, dans lequel les moyens pour déterminer une position cible d'une unité de marchandise transportée (11a..11d) sont un produit logiciel.

14. Système de convoyage (10) selon l'une quelconque des revendications 4 à 13 précédentes, dans lequel le système de commande/régulateur pour commander ou réguler une distance cible (d) entre des unités de marchandises transportées individuelles (11a..11d) sur la base de ladite position cible, comprend des signaux de commande vers au moins deux entraînements de convoyeur adjacents, de préférence au moins trois entraînements de convoyeur adjacents, et de préférence au moins quatre entraînements de convoyeur adjacents.

15. Système de convoyage (10) selon l'une quelconque des revendications 4 à 14 précédentes, dans lequel le système de convoyage comprend des moyens permettant de vérifier les distances cibles atteintes.
